# EUROPEAN PATENT APPLICATION

(11) **EP 4 527 367 A1**
(43) Date of publication of application: **26.03.2025**
(21) Application number: 23807670.7
(22) Date of filing: 17.05.2023
(51) Int. Cl.: A61G 11/00, F24F 7/003, F24F 8/158

(54) **INFANT INCUBATOR, CHILDCARE SYSTEM, AND REMOVAL METHOD**

(30) Priority: 20.05.2022 JP 2022083366; 24.02.2023 JP 2023027550
(71) Applicant: New Cosmos Electric Co., Ltd., Osaka-shi, Osaka 532-0036 (JP); University of Tsukuba, Ibaraki 305-8577 (JP)
(72) Inventor: SATOU, Takeshi, Osaka-shi, Osaka 532-0036 (JP); NISHII, Makoto, Osaka-shi, Osaka 532-0036 (JP); SUEHIRO, Yo, Osaka-shi, Osaka 532-0036 (JP); FUJIYAMA, Satoshi, Tsukuba-shi, Ibaraki 305-8577 (JP); HITAKA, Daisuke, Tsukuba-shi, Ibaraki 305-8577 (JP); AKAHOSHI, Hirokazu, Tsukuba-shi, Ibaraki 305-8577 (JP)
(74) Representative: M. Zardi & Co S.A.
(86) International application number: PCT/JP2023/018444
(87) International publication number: WO 2023/224069

(57) **Abstract**

It is an object to avoid an infant patient in an incubator from being unintentionally exposed to volatile substances. An incubator (3) comprises a housing chamber (101) capable of housing an infant patient (X) and a removal part (134) for removing volatile substances from air inside the housing chamber (101).

## Description

### TECHNICAL FIELD

The present invention relates to an incubator, an incubation system, and a removal method.

### BACKGROUND ART

An incubator is a medical device for protecting and treating an infant patient such as a premature infant and a newborn infant. The infant patient undergoes various medical interventions in the incubator. Examples of medical interventions that affect the infant patient include blood drawing, attachment of a ventilator, infusion, and the like.

### SUMMARY OF THE INVENTION

As an example of medical interventions, there is a case of drawing blood from an infant patient in an incubator or performing infusion on the infant patient. In these medical interventions, alcohol such as ethanol may be used for disinfection of a site to be stuck with a needle, etc. Since alcohol such as ethanol has volatility, an alcohol concentration in the air inside the incubator increases with each medical intervention. As a result, the infant patient in the incubator may be unintentionally exposed to volatile substances.

Some volatile substances affect health of the infant patient. For example, it is widely known that drinking alcohol during pregnancy has adverse effects on a fetus (fetal ethanol syndrome), and it is desirable to improve the situation where the infant patient is exposed to volatile substances in the incubator.

It is an object of the present disclosure to avoid an infant patient in an incubator from being unintentionally exposed to volatile substances.

The incubator according to one aspect of the present disclosure comprises a housing chamber capable of housing an infant patient and a removal part for removing volatile substances from air inside the housing chamber.

The incubation system according to one aspect of the present disclosure comprises an incubator with a housing chamber capable of housing an infant patient and a removal mechanism for removing volatile substances from air inside the housing chamber.

The removal method according to one aspect of the present disclosure is a method of removing volatile substances inside a housing chamber capable of housing an infant patient by a removal means provided in an incubator with the housing chamber, wherein the removal means removes the volatile substances from the air inside the housing chamber.

### BRIEF DESCRIPTION OF THE DRAWINGS

FIG. 1 is a schematic perspective view of an incubator equipped with a volatile substance removal device according to a first embodiment of the present disclosure.
FIG. 2 is a schematic plan view of the volatile substance removal device shown in FIG. 1.
FIG. 3 is a cross-sectional view of the volatile substance removal device shown in FIG. 2, taken along A-A line as viewed in the direction of the arrows.
FIG. 4 is a schematic plan view of a volatile substance removal device according to a second embodiment of the present disclosure.
FIG. 5 is a schematic plan view of a volatile substance removal device according to a third embodiment of the present disclosure.
FIG. 6 is a cross-sectional view of the volatile substance removal device shown in FIG. 5, taken along A-A line as viewed in the direction of the arrows.
FIG. 7 is a view illustrating an example of use of the volatile substance removal device shown in FIG. 5.
FIG. 8 is a schematic perspective view of a purification device according to a fourth embodiment of the present disclosure.
FIG. 9 is a cross-sectional view of the purification device shown in FIG. 8, taken along B-B line as viewed in the direction of the arrows.
FIG. 10 is a schematic perspective view showing a purification device according to a fifth embodiment of the present disclosure.
FIG. 11 is a schematic perspective view showing a purification device according to a sixth embodiment of the present disclosure.
FIG. 12 is a schematic cross-sectional view of the purification device shown in FIG. 11.
FIG. 13 is a schematic block diagram of an incubation system according to a seventh embodiment of the present disclosure.
FIG. 14 is a schematic perspective view of an incubator showing a variation of the incubator shown in FIG. 1.
FIG. 15 is a schematic cross-sectional view of a variation of the volatile substance removal device shown in FIG. 3.
FIG. 16 is a schematic cross-sectional view of a variation of the volatile substance removal device shown in FIG. 6.
FIG. 17 is a schematic cross-sectional view of a variation of the volatile substance removal device shown in FIG. 3.
FIG. 18 is a flowchart illustrating an ethanol removal method according to the first embodiment of the present disclosure.
FIG. 19 is a schematic cross-sectional view of the incubator shown in FIG. 1.
FIG. 20 is a schematic perspective view of an incubator according to an eighth embodiment of the present disclosure.
FIG. 21 includes a schematic perspective view 2101 showing a state where a holder provided in the incubator shown in FIG. 20 is pulled out and a schematic perspective view 2102 showing an enlarged view of the area surrounded by a dashed line in 2101.
FIG. 22 is a cross-sectional view of an incubator according to a ninth embodiment of the present disclosure.

### EMBODIMENT FOR CARRYING OUT THE INVENTION

### [First embodiment]

One embodiment of the present invention will be described below in detail. The incubator will be described below taking as an example a closed-type incubator that will be mentioned later.

Some of medical interventions (intravenous administration, etc.) on an infant patient are performed inside the incubator. Moreover, it is necessary to adsorb and remove volatile substances contained in air inside the incubator. The volatile substances include substances, such as ethanol, used in medical interventions on an infant patient X.

Thus, in the incubator, a volatile substance removal device is installed which removes volatile substances used in medical interventions performed inside the incubator from the air inside the incubator. This can improve safety of performing medical interventions on the infant patient inside the incubator. It should be noted that one example of the reason for installing the volatile substance removal device inside the incubator can be a fact that problems are less likely to occur in terms of hygiene and functionality. For example, if all or a part of the volatile substance removal device is installed outside the incubator, condensation, etc. will occur due to differences in temperature and humidity between the inside and the outside of the incubator, which can easily cause problems in terms of hygiene and functionality. For this reason, the volatile substance removal device is preferably installed inside the incubator. Hereinafter, the volatile substance removal device is referred to as an ethanol removal device, as ethanol is explained as an example of a volatile substance to be removed. First, an overview of the incubator will be described.

### <Overview of incubator>

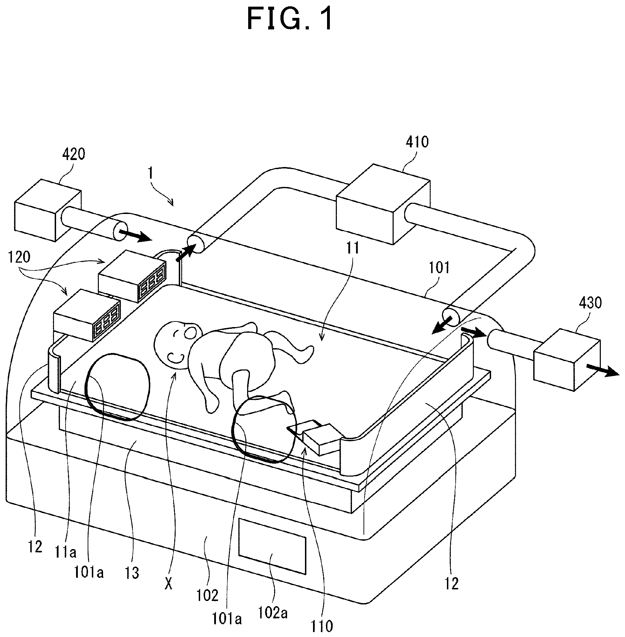

FIG. 1 is a schematic perspective view of an incubator 1. The incubator 1 comprises a housing chamber 101 for housing an infant patient X and a loading stand 102 for loading the housing chamber 101 thereon. Inside the housing chamber 101, a bed 11 and screen parts 12 arranged at the front and the back of the bed are arranged. A surface 11a of the bed 11 is one example of a placing surface on which the infant patient is placed, in the bed 11. The bed 11 is installed on a bed stage 13 provided on the loading stand 102. The bed stage 13 is capable of moving the bed 11 in an up-down direction or up-down and left-right directions. The screen part 12 is formed of a transparent resin that has a predetermined height from the surface 11a of the bed 11 and a predetermined width.

The housing chamber 101 is provided with two openings 101a for treatment, allowing a doctor or nurse to perform a treatment such as instillation on the infant patient X. When any treatment is performed on the infant patient X inside the housing chamber 101, it is always necessary to perform disinfection. For example, an alcohol swab is used to disinfect a site to be treated such as hands of the infant patient X. If the alcohol swab is used in the housing chamber 101, ethanol is generated in the housing chamber 101. In order to remove the generated ethanol, an ethanol removal device 110 is arranged on the bed 11, inside the housing chamber 101.

Here, the air in the housing chamber 101 includes a first air located away from a source generating ethanol (e.g., alcohol swab) and a second air located near the source generating ethanol (e.g., alcohol swab). Thus, the ethanol removal device 110 primarily removes ethanol from the second air located near the source of ethanol. A drive control of the ethanol removal device 110 is performed by operation of an operation part (not shown) provided in each device.

The incubator 1 is an incubator (so-called a closed-type incubator) provided with a housing chamber in which internal temperature and humidity can be regulated to house an infant patient. Therefore, the incubator 1 further comprises a circulating part 410, a supplying part 420, and a discharging part 430. The circulating part 410 circulates air, in which temperature and humidity are regulated, through the housing chamber 101. The supplying part 420 supplies air from the outside to the inside of the housing chamber 101. The discharging part 430 discharges at least a part of the air inside the housing chamber 101 to the outside of the housing chamber 101. Thereby, the incubator 1 maintains the temperature and humidity in the housing chamber where the infant patient is housed, and is ventilated by natural intake and exhaust at a level that allows the temperature and humidity to be maintained. It should be noted that the incubator 1 may be capable of adjusting an oxygen concentration in addition to the temperature and humidity. A direction and a speed, etc. of an airflow of the air supplied in the circulating part are taken into consideration so as not to affect the infant patient. Moreover, instead of the configuration according to the explanation above, the incubator 1 may be configured to be provided with at least an external circulating part 410, among the external circulating part 410, an external supplying part 420, and an external discharging part 430.

The loading stand 102 is provided with an operation panel 102a so that a user (doctor, nurse, etc.) can operate the functions, etc. of the incubator 1.

In the incubator 1, the temperature and humidity of the air inside the housing chamber 101 are adjusted by the circulating part 410. Additionally, the ethanol removal device 110 takes in air inside the housing chamber 101, removes ethanol contained in the taken-in air, and exhausts the air, from which ethanol has been removed, back into the housing chamber 101. This makes it possible to remove ethanol from the housing chamber 101 while maintaining the temperature and humidity inside the housing chamber 101. Although another method, in which ethanol is removed from the air outside the incubator 1 and the air outside the incubator 1 is replaced with the air inside the incubator 1, is also considered, this method makes it difficult to maintain the temperature and humidity inside the incubator 1.

Moreover, by arranging the ethanol removal device 110 inside the housing chamber 101, it is not required to secure a space for installing the ethanol removal device 110 besides the space for installing the incubator 1.

Furthermore, the ethanol removal device 110 can be freely arranged on the bed 11 for use. Therefore, when disinfecting the infant patient X, the ethanol removal device 110 is arranged at a position close to a site to be disinfected, so that ethanol generated during disinfection can be effectively adsorbed.

### <Overview of ethanol removal device>

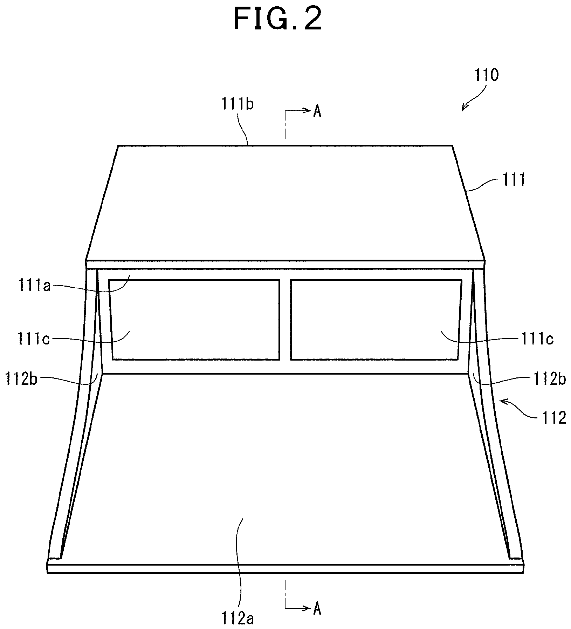

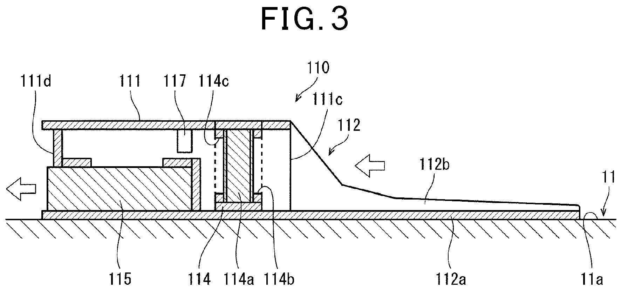

FIG. 2 is a schematic front view of the ethanol removal device 110. FIG. 3 is a cross-sectional view taken along A-A line as viewed in the direction of the arrows of FIG. 2.

The ethanol removal device 110 comprises an enclosure 111 as shown in FIG. 2. On a front surface 111a of the enclosure 111, intake parts 111c for taking in air are provided in parallel in a longitudinal direction of the front surface 111a, and on a rear surface 111b thereof, an exhaust part 111d (FIG. 3) for exhausting the air, from which ethanol has been removed, inside the enclosure 111 is provided. A guiding part 112 for guiding the air to the intake parts 111c is provided on the front surface 111a of the enclosure 111.

As shown in FIG. 3, a first removal part 114 and a suction part 115 are arranged inside the enclosure 111 in this order from the intake part 111c side toward the exhaust part 111d.

The first removal part 114 comprises a crushed activated charcoal 114a, where the first removal part 114 adsorbs vaporized ethanol contained in air sucked in by the suction part 115 from a first opening 114b on the intake part 111c side and exhausts it from a second opening 114c on the suction part 115 side. The first removal part 114 is of a cartridge type that houses the crushed activated charcoal 114a in a cartridge that is detachable from the upper side of the enclosure 111. This makes it easy to replace the first removal part 114. Moreover, the crushed activated charcoal 114a is disposable. Therefore, the first removal part 114 is replaced as follows. The crushed activated charcoal housed in the first removal part 114 taken out from the enclosure 111 is discarded, a new crushed activated charcoal is housed in the first removal part 114, and the first removal part 114 is mounted to the enclosure 111 again.

A gas sensor 117 is provided between the first removal part 114 and the suction part 115. The gas sensor 117 is a sensor for detecting a decrease in capability of the first removal part 114 to adsorb ethanol. Specifically, if a control part (not shown) of the ethanol removal device 110 determines that a concentration of ethanol as detected by the gas sensor 117 is equal to or greater than a preset value (a value for determining that the first removal part 114 needs to be replaced), it determines that the capability of the first removal part 114 to adsorb ethanol decreases below a predetermined standard. That is, the control part can notify that it is time to replace the first removal part 114 based on the concentration of ethanol as detected by the gas sensor 117. As such, the control part determines an adsorption state of the first removal part 114 (whether it is in a breakthrough state (it adsorbs beyond its adsorption function, causing an adsorption subject to leak) or whether it is in a state where it can sufficiently adsorb) based on the concentration of ethanol as detected by the gas sensor 117. Accordingly, the gas sensor 117 functions as a breakthrough sensor. That is, the gas sensor 117 is a sensor that detects a decrease in adsorption capacity of the activated charcoal in the first removal part 114, and it is configured to notify of a time to replace the activated charcoal in the first removal part 114 based on detection results obtained by the gas sensor 117.

The suction part 115 comprises two sirocco fans, where the suction part 115 sucks in air from the intake parts 111c via the first removal part 114 and exhausts it from the exhaust part 111d provided on the rear surface 111b of the enclosure 111. Here, an amount of intake air per minute in the suction part 115 is set to 20 L or more; however, it is not limited to this. However, it is preferable that the amount of intake air in the suction part 115 is set within a range that does not disturb an environment inside a closed incubator depending on an amount of intake air and an amount of exhaust air.

It is desirable that an exhaust direction of air by the exhaust part 111d be a direction that does not interfere with an air flow inside the incubator 1. It is also preferable that air exhausted from the exhaust part 111d (air from which ethanol has been removed) does not come into contact with the body of the infant patient X in the housing chamber 101. This is because, upon contact of the air exhausted from the exhaust part 111d with the infant patient X, the infant patient X may be deprived of the body temperature and a water loss may be facilitated through insensible perspiration. Therefore, the ethanol removal device 110 is configured so that the air exhausted from the exhaust part 111d is exhausted in a direction away from the infant patient X in the housing chamber 101.

Air taken in from the intake parts 111c of the enclosure 111 is guided by the above-mentioned guiding part 112. The guiding part 112 will be described in detail. The guiding part 112 comprises a loading part 112a on which at least one of at least a part of the infant patient X who is a treatment subject for treatment with ethanol and a source of ethanol such as alcohol swab can be loaded.

If at least a part of the infant patient X is placed on the loading part 112a and treatment with ethanol (e.g., disinfection, etc.) is performed, or if alcohol swab or the like used for treatment, which is a source of ethanol, is loaded on the loading part 112a, ethanol will float around the part of the infant patient X placed on the loading part 112a. However, the ethanol removal device 110 actively guides the ethanol-containing air floating on the loading surface (predetermined surface) in the loading part 112a, on which at least the part of the infant patient X is placed, to the intake parts 111c by the guiding part 112. The ethanol removal device 110 can thereby remove ethanol by the first removal part 114 inside the enclosure 111. Moreover, ethanol can also be removed by the first removal part 114 and a second removal part 116 inside the enclosure 111, as in an example that will be described later. Thus, the ethanol removal device 110 becomes able to remove ethanol contained in air in a short period of time. When compared to a method of replacing air outside the incubator 1 with air inside the incubator 1, with the replacement method, ethanol volatilized from an alcohol swab or the like floats inside the incubator and is then discharged outside the incubator 1, and therefore, the maximum concentration of ethanol inside the incubator 1 cannot be suppressed. In addition, the concentration of ethanol inside the incubator 1 becomes high, and therefore, it takes time to discharge ethanol to the outside of the incubator 1, and the influence of ethanol on the infant patient cannot be sufficiently reduced. In contrast, when using the ethanol removal device 110, ethanol volatilized from the alcohol swab or the like is removed near the source, and therefore, the maximum value of concentration of ethanol in the incubator 1 can be suppressed, so that the influence of ethanol on the infant patient can be sufficiently reduced. It should be noted that it is conceivable to open a door or the like of the incubator in order to quickly exchange air inside and outside the incubator 1; however, such a method cannot be adopted because it would cause sudden fluctuations in temperature, humidity, oxygen concentration, or the like, which would place a great burden on the infant patient.

The loading part 112a consists of a single plate-shaped member (such as a resin plate) and is formed integrally with the enclosure 111. The loading part 112a has an approximately trapezoidal shape having, on the front surface 111a side of the enclosure 111, a width that is approximately the same as a longitudinal width of the front surface 111a, and on the side opposite to the front surface 111a, a width longer than the longitudinal width of the front surface 111a. As such, the width on the side opposite to the front surface 111a is longer than that on the front surface 111a side. By adopting this configuration, ease of treatment on the loading part 112a is remarkably improved. Moreover, the loading part 112a may be used to place the part of the infant patient X thereon for treatment such as disinfection with an alcohol swab, and may also be used as a temporary holding place for the alcohol swab.

The guiding part 112 has two wall parts 112b, 112b erected upward from a peripheral edge of the loading part 112a. That is, the wall parts 112b are formed excluding the part opposite the intake parts 111c. Here, the wall part 112b is formed of the same kind of material as the loading part 112a and formed integrally therewith.

The wall part 112b can prevent ethanol, generated after at least the part of the infant patient X placed on the loading part 112a is treated, from diffusing outside the loading part 112a. This makes it possible to guide air containing ethanol more actively to the intake parts 111c.

Moreover, since the wall parts 112b are formed excluding the part opposite the intake parts 111c, a practitioner can perform treatment (disinfection) with ethanol on at least the part of the infant patient X placed on the loading part 112a from a place where the wall parts 112b are not formed. Here, the practitioner is a medical professional, a nurse, or the like. Furthermore, the ethanol removal device 110 can be configured not to inhibit the guidance of ethanol to the intake parts 111c. Treatment on a treatment subject like at least the part of the infant patient X with ethanol can thereby performed without being hindered by the wall parts 112b. Therefore, the treatment on the treatment subject becomes easy to be performed (assuming treatment by a doctor or nurse in the housing chamber 101 of the incubator 1), and ethanol that is generated can be removed. Thus, the treatment can be performed on the infant patient X while taking into consideration safety inside the incubator 1. In addition, in order not to interfere with medical procedures on the infant patient X, and to improve a rate of removal of ethanol, the intake parts 111c of the ethanol removal device 110 are arranged in a direction where a wind direction of air containing vaporized ethanol becomes appropriate. Furthermore, the suction part 115 of the ethanol removal device 110 has a fan speed set so that a wind speed of the air sucked in from the intake parts 11c becomes appropriate.

The wall part 112b has a shape that is highest on the front surface 111a side of the enclosure 111 and becomes lower as it extends away from the front surface 111a. By making the front surface 111a side of the enclosure 111 higher than the rear surface 111b in the wall parts 112b, air can be easily guided to the intake parts 111c. By making the height of the wall part 112b lower as it extends away from the front surface 111a, the wall part 112b does not interfere with treatment, which can be therefore easily performed on the loading part 112a. As such, by shaping the wall part 112b to be highest on the front surface 111a side of the enclosure 111 and to be lower as it extends away from the front surface 111a, both ease of introducing air and ease of treatment can be achieved.

In order to securely guide air to the intake parts 111c of the enclosure 111, it is sufficient that at least a part of the guiding part 112 is connected to the intake parts 111c. Specifically, ends of the loading part 112a and the wall part 112b of the guiding part 112 on the front surface 111a side may be connected to the intake parts 111c. In this case, the air guided to the intake parts 111c by the guiding part 112 is less likely to leak between the ends of the loading part 112a and the wall part 112b of the guiding part 112 on the front surface 111a side and the intake parts 111c, and a large amount of air is guided to the intake parts 111c. That is, at least the part of the guiding part 112 is connected to the intake parts 111c, so that the air can be securely guided to the intake parts 111c.

According to the ethanol removal device 110 having the above-described configuration, the guiding part 112 for guiding air containing ethanol to the intake parts 111c has the loading part 112a on which at least a part of a hand, foot, or the like of the infant patient X, who is the treatment subject for treatment with ethanol, can be placed, making it possible for the guiding part 112 to guide outside air containing ethanol used when treating the treatment subject on the loading part 112a to the intake parts 111c. As such, at least the part of the hand, foot, or the like of the infant patient X, who is the treatment subject, is placed on or touches the guiding part 112. Therefore, it is desirable that the guiding part 112 be soft. A material that is applied to the guiding part 112 is necessary to, for example, have elasticity (or flexibility), be difficult to adsorb ethanol, and further, not adversely affect the body of the infant patient X and the gas sensor 117, or the like. The guiding part 112 is required to be more difficult to adsorb ethanol than the first removal part 114.

Moreover, as at least the part of the treatment subject is placed on the loading part 112a, ethanol floats around the treatment subject placed on the loading part 112a. Thus, air containing ethanol floating on the loading surface (predetermined surface) for the treatment subject on the loading part 112a is actively guided by the guiding part 112 to the intake parts 111c. The ethanol removal device 110 thereby becomes able to remove ethanol contained in the air in a short period of time.

### <Ethanol removal method>

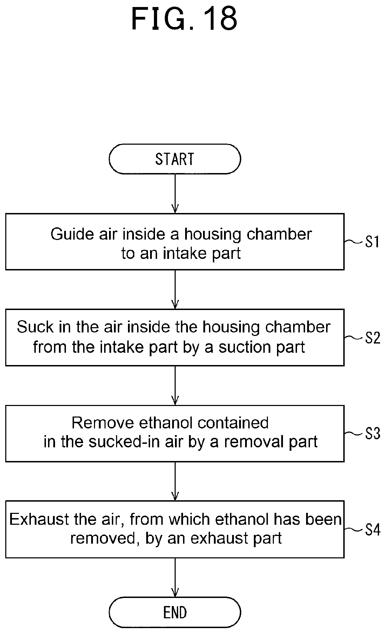

FIG. 18 is a flowchart showing one example of flow of an ethanol removal method according to the present embodiment. The ethanol removal method according to the present embodiment is installed in an incubator equipped with a housing chamber 101 in which internal temperature and humidity can be regulated to house an infant patient, and removes ethanol vaporized during medical procedures with ethanol on the infant patient housed in the housing chamber 101 from the housing chamber 101.

In a step 1 (S1), the ethanol removal device 110 guides air inside the housing chamber 101 to the intake parts 111c that suck the air into the first removal part 114 (a guiding step). In the present embodiment, the first removal part 114 is configured to realize a removal means, and the intake part 111c is configured to realize an intake means.

In a step 2 (S2), the ethanol removal device 110 sucks in air inside the housing chamber 101 from the intake parts 111c by the suction part 115 (a suction step). In the present embodiment, the suction part 115 is configured to realize a suction means.

In a step 3 (S3), the ethanol removal device 110 removes ethanol contained in the sucked-in air by the first removal part 114 (a removal step).

In a step (S4), the ethanol removal device 110 exhausts air, from which ethanol has been removed, by the exhaust part 111d (an exhaust step). In the present embodiment, the exhaust part 111d is configured to realize an exhaust means.

According to the above-described configurations, the method comprises the guiding step for guiding the air inside the housing chamber 101 to the intake parts 111c, so that the air can be efficiently guided by the suction part 115 (suction means). This allows a fan constituting the suction part 115 to be small, so that the size of the entire device for realizing the ethanol removal method can be reduced. Thus, even if the device for realizing the ethanol removal method is used inside a closed-type incubator 1, it does not interfere with medical procedures on the infant patient.

Moreover, in the exhaust step, an exhaust direction of the air by the exhaust part 111d (exhaust means) may be a direction different from a direction in which the intake parts 111c (intake means) are provided. The intake parts 111c take in air containing ethanol, and the exhaust part 111d exhausts air from which ethanol has been removed. Therefore, if the air, from which ethanol has been removed, is introduced to the intake parts 111c, the air containing ethanol cannot be efficiently taken in. Thus, by setting the exhaust direction of the air by the exhaust part 111d to the direction different from the direction in which the intake parts 111c are provided, it makes possible for the air exhausted from the exhaust part 111d (the air from which ethanol has been removed) not to interfere with the intake of air containing ethanol by the intake parts 111c.

It should be noted that in the present embodiment, the example is described in which the wall part 112b of the guiding part 112 is provided on both side ends of the loading part 112a; however, it is not limited to this. For example, the wall part 112b may be provided not only on both side ends of the loading part 112a but also on the loading part 112a. This example will be described in the following second embodiment.

### [Second embodiment]

Another embodiment of the present invention will be described below. It should be noted that for ease of explanation, the same reference numerals are given to members having the same functions as those described in the above-described embodiment, and their explanations are not repeated.

### <Overview of volatile substance removal device>

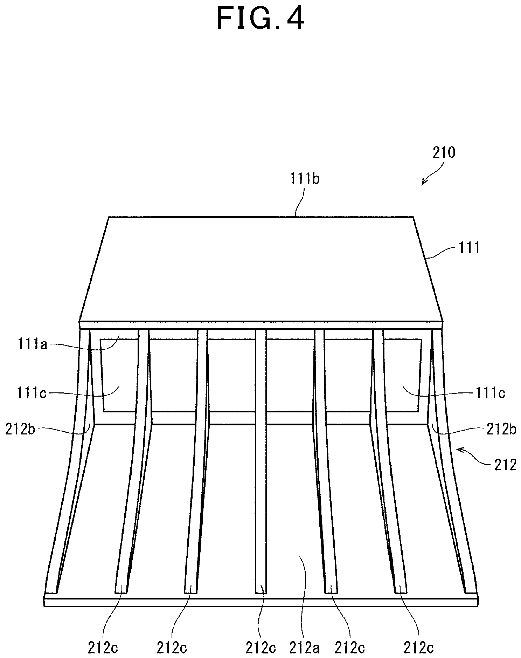

FIG. 4 is a schematic front view of an ethanol removal device 210. The ethanol removal device 210 has the same enclosure 111 as that of the ethanol removal device 110 described in the first embodiment and a guiding part 212 different from that of the ethanol removal device 110.

The guiding part 212 has a loading part 212a, two first wall parts 212b provided to erect upward from both side edges of the loading part 212a, and five second wall parts 212c provided substantially parallel to the first wall parts 212b at substantially equal intervals on the loading part 212a.

The first wall part 212b and the second wall part 212c have the same shape as the wall parts 112b provided in the guiding part 112 of the ethanol removal device 110 of the first embodiment.

The five second wall parts 212c are provided on the loading part 212a at approximately equal intervals, and together with the two first wall parts 212b, form six passages (grooves) for guiding air to the intake parts 111c of the enclosure 111. As such, when six grooves for guiding air to the intake parts 111c of the enclosure 111 are formed, it becomes easy to guide the air to the intake parts 111c, and ethanol contained in the air from the source is thoroughly removed.

Like the guiding part 112 in the first embodiment, the guiding part 212 is required to be made of a material having elasticity, as at least the part of the hand, foot, or the like of the infant patient X, who is the treatment subject, will be placed on or touch the guiding part 212. Moreover, the guiding part 212 is also required to be difficult to adsorb ethanol, and further, the guiding part 212 is required not to adversely affect the infant patient X or the sensors (gas sensor 117, etc.). The guiding part 212 is required to be more difficult to adsorb ethanol than the first removal part 114.

However, among the loading part 212a and the second wall part 212c that constitute the guiding part 212, it is preferable that at least the second wall part 212c provided on the loading part 212a has elasticity.

### [Third embodiment]

Another embodiment of the present invention will be described below. It should be noted that for ease of explanation, the same reference numerals are given to members having the same functions as those described in the above-described embodiment, and their explanations are not repeated.

### <Overview of ethanol removal device>

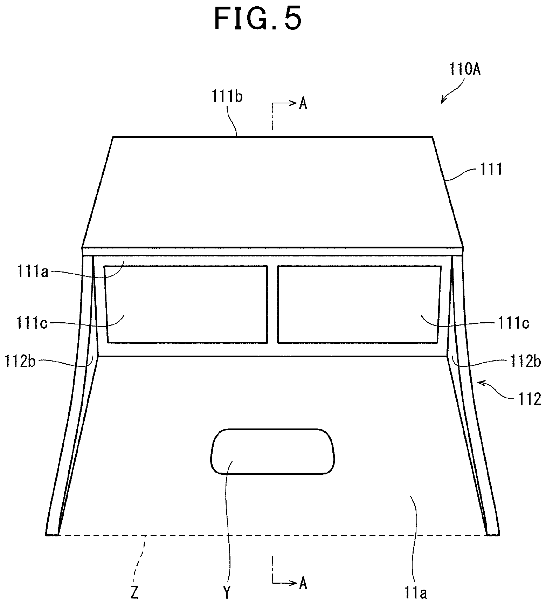

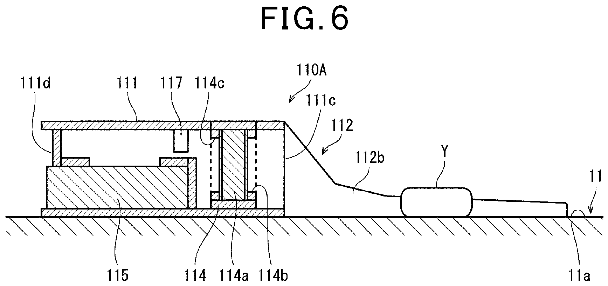

FIG. 5 is a schematic front view of an ethanol removal device 110A. FIG. 6 is a cross-sectional view taken along A-A line as viewed in the direction of the arrows of FIG. 5.

As shown in FIGS. 5 and 6, the ethanol removal device 110A has a structure in which the loading part 112a is removed from the guiding part 112 of the ethanol removal device 110 of the first embodiment. That is, as shown in FIG. 5, the ethanol removal device 110A has the same structure as the ethanol removal device 110 of the first embodiment, except that the structure of the guiding part 112 is different.

As shown in FIG. 6, a first removal part 114 and a suction part 115 are arranged inside the enclosure 111 of the ethanol removal device 110A in this order from the intake part 111c side toward the exhaust part 111d.

The suction part 115 comprises two sirocco fans, where the suction part 115 sucks in air from the intake parts 111c through the first removal part 114 and exhausts it from the exhaust part 111d provided on the rear surface 111b of the enclosure 111. Here, an amount of intake air per minute in the suction part 115 is set to 20 L or more; however, it is not limited to this. However, it is preferable that the amount of intake air in the suction part 115 is set within a range that does not disturb an environment inside a closed incubator depending on an amount of intake air and an amount of exhaust air.

It is preferable that air exhausted from the exhaust part 111d (air from which ethanol has been removed) does not come into contact with the body of the infant patient X in the housing chamber 101. Therefore, the ethanol removal device 110 is configured to exhaust the air in a direction away from the infant patient X in the housing chamber 101.

Air taken in from the intake parts 111c of the enclosure 111 is guided by the above-mentioned guiding part 112. The guiding part 112 will be described in detail. The guiding part 112 is formed to guide air containing ethanol to the intake parts 111c from a direction that is not perpendicular to the surface 11a of the bed 11, which is a loading surface on which an alcohol swab Y, which is a source generating ethanol, is loaded.

When the alcohol swab Y is loaded on the surface 11a of the bed 11, ethanol generated from the alcohol swab Y floats on the loading surface on which the alcohol swab Y is loaded. However, as the guiding part 112 is formed to guide the air containing ethanol to the intake parts 111c from the direction that is not perpendicular to the loading surface of the surface 11a of the bed 11, on which the alcohol swab Y is loaded, the air containing ethanol generated by the alcohol swab Y loaded on the loading surface can be guided to the intake parts 111c.

In order to guide air to the intake parts 111c of the enclosure 111, it is preferable that at least a part of the guiding part 112 is in contact with the surface 11a of the bed 11, which is the loading surface on which the alcohol swab Y generating ethanol is loaded.

As described above, at least the part of the guiding part 112, which guides the air containing ethanol to the intake parts 111c, is in contact with the loading surface of the surface 11a of the bed 11, on which the alcohol swab Y generating ethanol is loaded, thereby allowing the air containing ethanol generated by the alcohol swab Y loaded on the loading surface to be more effectively guided to the intake parts 111c.

As shown in FIG. 5, the guiding part 112 has two wall parts 112b, 112b surrounding a predetermined area Z in the surface of the bed 11, on which the alcohol swab Y generating volatile substances is loaded. The wall parts 112b are each formed to protrude forward from both ends in a longitudinal direction of the front surface 111a of the enclosure 111. Although the wall parts 112b may be provided to surround the periphery of the area Z, in the present embodiment, taking into consideration ease of treatment, the wall parts 112b are formed excluding the part opposite the intake parts 111c.

As a result, the guiding part 112 has the wall parts 112b surrounding the predetermined area Z of the surface 11a that is the loading surface of the bed 11, on which the alcohol swab Y that is the source of ethanol is loaded, thereby allowing ethanol generated from the alcohol swab Y loaded on the surface 11a to be prevented from diffusing outside the guiding part 112 by the wall parts 112b. This allows the ethanol removal device 110A to guide the air containing ethanol more actively to the intake parts 111c.

Moreover, since the wall parts 112b are formed excluding the part opposite the intake parts 111c, treatment with ethanol can be performed on at least the part of the infant patient X placed on the surface 11a from a place where the wall parts 112b are not formed. Furthermore, the wall parts 112b can be configured not to inhibit the guidance of ethanol to the intake parts 111c. The practitioner can thereby perform the treatment with ethanol on a treatment subject such as at least the part of the infant patient X without being hindered by the wall parts 112b, making the treatment on the treatment subject easier to perform (assuming treatment by a doctor or nurse in the housing chamber 101 of the incubator 1), and allowing the removal of ethanol that is generated.

The wall part 112b has a shape that is highest on the front surface 111a side of the enclosure 111 and becomes lower as it extends away from the front surface 111a. The wall part 112b is made higher on the front surface 111a side of the enclosure 111 in order to make it easy to guide air to the intake parts 111c with the guide part 112 loaded on the surface 11a of the bed 11, and the wall part 112b is made lower as it extends away from the front surface 111a in order to make it easy to perform treatment on the surface on which the alcohol swab Y is loaded. As such, by shaping the wall part 112b to be highest on the front surface 111a side of the enclosure 111 and to be lower as it extends away from the front surface 111a, both ease of introducing air and ease of treatment can be achieved with the guiding part 112 loaded on the surface 11a of the bed 11.

According to the ethanol removal device 110A having the above-described configuration, the guiding part 112 that guides the air containing ethanol to the intake parts 111c is formed to guide the air containing ethanol to the intake parts 111c from a direction that is not perpendicular to the surface 11a of the bed 11, which is the loading surface on which the source generating ethanol (such as alcohol swab Y) is loaded. The air containing ethanol generated by the alcohol swab Y loaded on the surface 11a of the bed 11 can be thereby guided by the guiding part 112 to the intake parts 111c. Thus, the ethanol removal device 110A can actively guide the air containing ethanol floating on the loading surface (the surface 11a of the bed 11), on which the alcohol swab Y is loaded, to the intake parts 111c by the guiding part 112. The ethanol removal device 110A thereby becomes able to remove the ethanol contained in the air in a short period of time. Moreover, the direction in which the air containing ethanol is taken in by the intake parts 111c is a direction that is not perpendicular to the surface 11a of the bed 11 on which the alcohol swab Y is loaded (a horizontal direction, a diagonal direction, or the like), and therefore, the alcohol swab Y is less likely to be hindered by the guiding part 112 when being loaded on the surface 11a of the bed 11 from above. Specifically, as shown in FIG. 6, when the direction, in which the air is taken in by the intake parts 111c, is a direction (a horizontal direction) that is not perpendicular to the surface 11a of the bed 11 on which the alcohol swab Y is loaded, a space above the guiding part 112 (in the direction opposite to the surface 11a of the bed 11) is open. Then, a doctor can load the alcohol swab Y from the opened space above the guiding part 112, so that the doctor's action of loading the alcohol swab Y is not hindered by the guiding part 112.

### (Example of use)

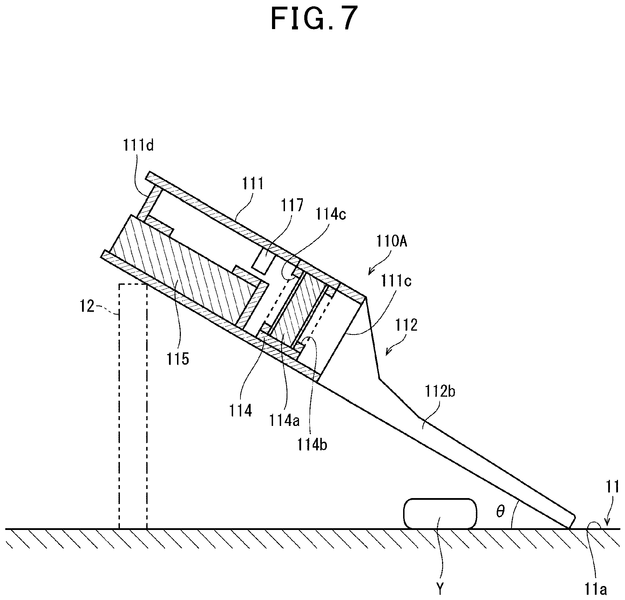

FIG. 7 is a schematic cross-sectional view explaining an example of use of the ethanol removal device 110A. As shown basically in FIGS. 5 and 6, the ethanol removal device 110A is basically used with the guiding part 112 and the enclosure 111 loaded on the surface 11a of the bed 11.

As shown in FIG. 7, the ethanol removal device 110A may be used to guide the air containing ethanol generated from the alcohol swab Y loaded on the surface 11a to the intake parts 111c, with the tip of the wall part 112b of the guiding part 112 brought into contact with the surface 11a of the bed 11 and with being tilted at a predetermined angle θ (0≤<θ<90°) from the surface 11a. That is, the ethanol removal device 110A may be used to guide the air to the intake parts 111c from the direction that is not perpendicular to the surface 11a of the bed 11.

Moreover, in the ethanol removal device 110A shown in FIG. 7, the wall part 112b may be composed of an elastic material, so that the tip of the wall part 112b may be slightly bent to increase the area of the wall part 112b in contact with the bed 11.

Furthermore, a part of the wall part 112b of the ethanol removal device 110A shown in FIG. 7 on the bed 11 side may be cut out.

As shown in FIG. 7, when the ethanol removal device 110A is used with being tilted, the ethanol removal device 110A may be configured to be supported by leaning the exhaust part 111d side of the enclosure 111 against the screen part 12. The screen part 12 and the ethanol removal device 110A may be configured integrally. It should be noted that the configuration in which the ethanol removal device 110A is supported with being tilted is not limited to them. For example, the ethanol removal device 110A may be configured to be supported by an inclined surface of a support member (not shown) installed on the surface 11a of the bed. The support member and the ethanol removal device 110A may be configured integrally.

Furthermore, as shown in FIG. 7, when the ethanol removal device 110A is supported with being tilted, treatment can be performed by inserting hands, fingers, or the like from below the ethanol removal device 110A (between the bed 11 and the ethanol removal device 110A).

### (Drive control of ethanol removal device)

The ethanol removal devices 110, 210, 110A of the first, second, and third embodiments are configured to drive and stop the fan in the suction part 115 therein by turning a power source on and off. This power source may be a battery (a primary battery, a rechargeable battery, or the like), an external power source, or a combination of the external power source and the rechargeable battery. In the case where the ethanol removal device is installed inside the incubator each time it is used, the battery is preferable as the power source, and in the case where the ethanol removal device is installed in the incubator all the time, the external power source is preferable as the power source. Usually, when treatment is performed on the infant patient X inside the housing chamber 101, a practitioner (a doctor or nurse) turns on the power source to drive the fan of the suction part 115. Moreover, a suction power in the ethanol removal devices 110, 210, 110A can be adjusted by a rotation speed of the fan in the suction part 115, so that ethanol can be appropriately sucked in and removed by changing the rotation speed of the fan depending on the concentration of ethanol to be removed.

Furthermore, the ethanol removal devices 110, 210, 110A of the first, second, and third embodiments each have a function of displaying an operating status (a driving status). The function of displaying the operating status refers to explicitly displaying whether the device is operating or not, whether the device is stopped or not, whether a filter (an activated charcoal in a removal part) needs to be replaced or not, whether a trouble occurs or not, whether a battery is lowered or not, or the like. In this case, the driving status may be displayed on a display panel or may be indicated by turning on a lamp corresponding to the driving status. This prevents the practitioner from forgetting to activate the ethanol removal devices 110, 210, 110A. Furthermore, the ethanol removal devices 110, 210, 110A can display a message encouraging replacement of the filter.

Furthermore, the ethanol removal devices 110, 210, 110A of the first, second, and third embodiments are all designed to be low in height when laid down and are sized not to interfere with work inside the incubator 1 (2). Furthermore, the ethanol removal devices 110, 210, 110A are preferably sized so that adsorbents, etc. are easy to be taken in and out from the opening 101a of the incubator 1 (2) when replacing the adsorbents inside the removal part. In addition, the ethanol removal devices 110, 210, 110A of the first, second, and third embodiments preferably have a mass for being easily taken in and out from the opening 101a of the incubator 1 and for easy handling (e.g., 120 g). In this way, the ethanol removal devices 110, 210, 110A can be used in existing incubators inside a ward.

### [Fourth embodiment]

One embodiment of the present invention will be described below in detail.

### <Overview of purification device>

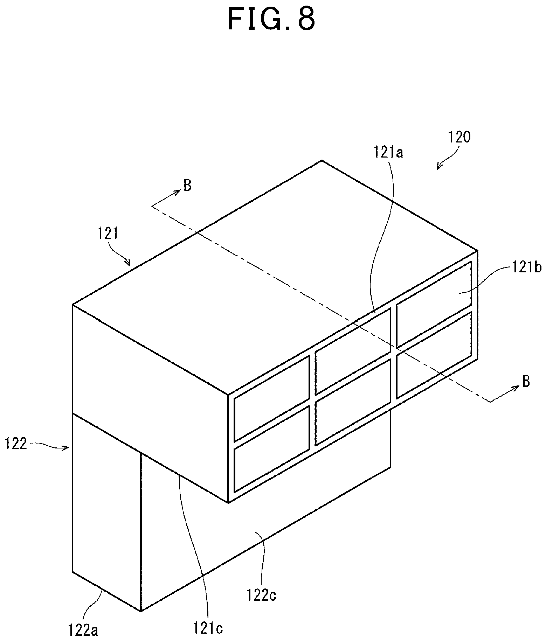

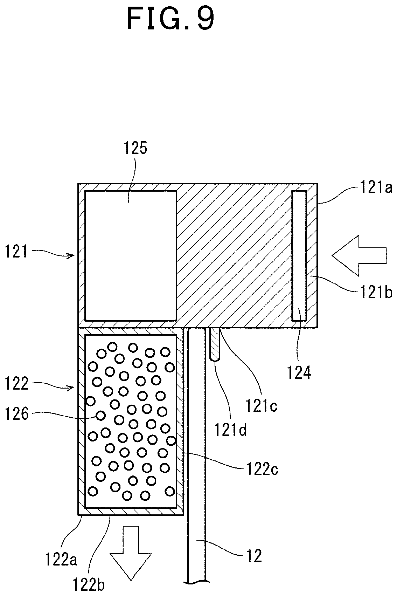

FIG. 8 is a schematic perspective view of a purification device 120. FIG. 9 is a cross-sectional view taken along B-B line as viewed in the direction of the arrows of FIG. 8.

As shown in FIG. 8, the purification device 120 comprises two enclosures (a first enclosure 121 and a second enclosure 122) that are provided integrally. Here, an example is shown in which separate enclosures (a first enclosure 121 and a second enclosure 122) are connected to form a single enclosure. It should be noted that two enclosures (a first enclosure 121 and a second enclosure 122) may be molded integrally into one enclosure. An intake part 121b that takes in outside air is provided on a front surface 121a of the first enclosure 121. The first enclosure 121 is structured to be in communication with the second enclosure 122 on a bottom surface 121c of the first enclosure 121, which is a rear part including a rear surface of the first enclosure 121, and is configured to guide the outside air taken in by the intake part 121b to the second enclosure 122. The rear part of the first enclosure 121 is located on the downstream side of the front surface 121a in a direction from the intake part 121b toward an exhaust part 122b (hereinafter referred to as an exhaust direction). In other words, the front surface 121a is located on the upstream side with respect to the rear part of the first enclosure 121 in the exhaust direction. The front surface of the second enclosure 122 is connected to the bottom surface 121c of the first enclosure 121, which is the rear part including the rear surface of the first enclosure 121. The exhaust part 122b for exhausting the outside air (FIG. 9) is provided on a rear surface 122a of the second enclosure 122 (a surface on a side opposite to the side communicating with the first enclosure 121). The front surface of the second enclosure 122 is located on the upstream side of the rear surface 122a in the exhaust direction. In other words, the rear surface 122a is located on the downstream side of the second enclosure 122 in the exhaust direction.

As shown in FIG. 9, the purification device 120 has an inverted L-shaped cross section and is installed on the screen part 12 inside the housing chamber 101. That is, the purification device 120 is installed above the placing surface. The purification device 120 is provided with fixing parts for fixing the first enclosure 121 and the second enclosure 122 to the inner edge of the housing chamber 101. Specifically, the bottom surface 121c of the first enclosure 121 is provided with a protrusion part 121d as a fixing part, which is parallel to a side surface 122c of the second enclosure 122 and protrudes downward at a position located away from the side surface 122c by a predetermined distance. The protrusion part 121d is a member having a predetermined height and a predetermined width and consisting of, for example, resin, and is provided integrally with the first enclosure 121. FIG. 9 shows an example in which the protrusion part 121d is connected to the first enclosure 121 to form one enclosure. It should be noted that the first enclosure 121 and the protrusion part 121d may be molded integrally into one enclosure.

The protrusion part 121d is provided at a position where a distance between the protrusion part 121d and the side surface 122c of the second enclosure 122 is slightly longer than a thickness of the screen part 12 of the housing chamber 101. Thereby, when the purification device 120 is installed on the screen part 12 provided on the inner edge of the housing chamber 101, the purification device 120 can be stably installed on the screen part 12 by sandwiching the screen part 12 by the side surface 122c of the second enclosure 122 and the protrusion part 121d of the first enclosure 121. In this way, the first enclosure 121 and the second enclosure 122 can be fixed by the protrusion part 121d to the screen part 12 that is a wall part erected on the inner edge of the housing chamber 101. As such, the first enclosure 121 and the second enclosure 122, that is, the main body of the purification device 120, are fixed, by the protrusion part 121d that is the fixing part, to the screen part 12 erected on the inner edge of the housing chamber 101. Thus, the purification device 120 does not interfere with medical procedures on the infant patient X in the incubator 1. It should be noted that the protrusion part 121d may be configured to be detachable from the screen part 12 provided on the inner edge of the housing chamber 101.

In this way, it is preferable to install the purification device 120 at a position that does not interfere with medical procedures. Furthermore, the exhaust direction of the purification device 120 (the direction in which the air, from which ethanol has been removed, is exhausted) is preferably a direction that does not inhibit air circulation inside the incubator 1 and does not come into contact with the infant patient X. Thereby, the incubator 1 maintains its functions (such as the functions of maintaining temperature and humidity), and does not deprive the infant patient X of the body temperature and facilitate a water loss through insensible perspiration upon contact of the air with the infant patient X, so that safety of the infant patient X can be secured. In the present specification, air inside the incubator 1 is intended to be air inside the housing chamber 101 of the closed-type incubator 1.

The protrusion part 121d provided on the first enclosure 121 is provided continuously in a width direction of the first enclosure 121 (a direction perpendicular to the exhaust direction inside the first enclosure 121).

The first enclosure 121 comprises a first removal part 124 and a suction part 125. The first removal part 124 comprises a fibrous activated charcoal and quickly adsorbs most of ethanol contained in the outside air taken in from the intake part 121b. Thus, if the amount of ethanol contained in the outside air is small, all of ethanol would be adsorbed in the first removal part 124. In the present embodiment, a sheet-shaped activated charcoal is used, which is obtained by molding the fibrous activated charcoal into a sheet.

The first removal part 124 is of a cartridge type that houses the sheet-shaped activated charcoal in a container that is detachable from the upper side of the first enclosure 121. This makes it easy to replace the first removal part 124. Moreover, the sheet-shaped activated charcoal is disposable. Therefore, the first removal part 124 is replaced as follows. The sheet-shaped activated charcoal housed in the first removal part 124 taken out from the first enclosure 121 is discarded, a new sheet-shaped activated charcoal is housed in the first removal part 124, and the first removal part 114 is mounted to the first enclosure 121 again.

The suction part 125 comprises one sirocco fan, sucks in outside air from the intake part 121b through the first removal part 124, and directs the air to a second removal part 126 at the subsequent stage in a direction perpendicular to a rotation axis direction of the fan. Here, the amount of intake air in the suction part 125 is set to 50 L/min or more; however, it is not limited to this value. It should be noted that in order to allow a large amount of air to be taken in, an air intake area of the suction part 125 is preferably large.

The second enclosure 122 comprises a second removal part 126. The second removal part 126 is of a cartridge type that houses a pellet-shaped activated charcoal within a cartridge, which is detachable from the second enclosure 122. This makes it possible to easily replace the second removal part 126. Moreover, since the pellet-shaped activated charcoal is disposable, the pellet-shaped activated charcoal housed in the second removal part 126 taken out for replacement is discarded, a new pellet-shaped activated charcoal is housed, and the second removal part 126 is mounted to the second enclosure 122 again.

An exhaust direction of air (air from which ethanol has been removed) exhausted from the exhaust part 122b of the purification device 120 having the above-described configuration is set in a direction that does not inhibit air circulation inside the incubator 1.

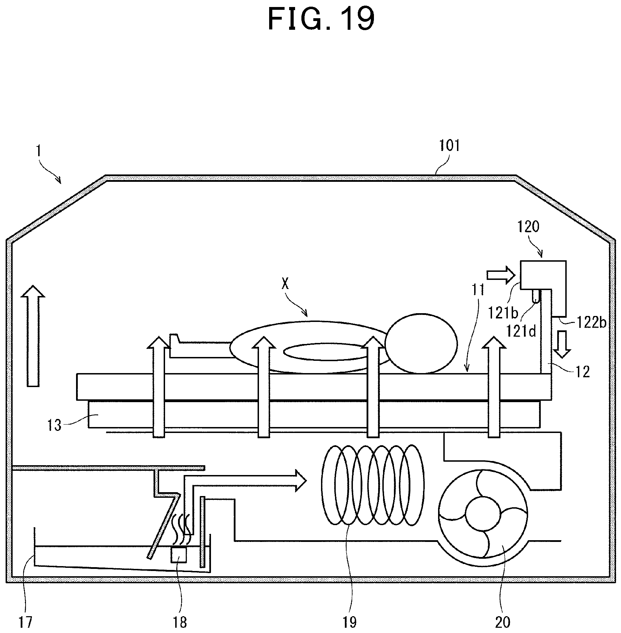

As shown in, for example, FIG. 19, the incubator 1 comprises a water tank 17, a heating part 18, a heater 19, and a fan 20. The water tank 17 houses water. The heating part 18 is provided inside the water tank 17 and generates steam by heating the water housed in the water tank 17. The steam generated by the heating part 18 is circulated inside the housing chamber 101 by the fan 20.

On the other hand, the purification device 120 is fixed to the screen part 12 provided on the bed 11, takes in air inside the housing chamber 101 from the intake part 121b, and exhausts the air from the exhaust part 122b. The air exhausted from the exhaust part 122b is exhausted to the bottom of the bed 11 through a gap between the screen part 12 of the bed 11 and an inner wall surface of the housing chamber 101 of the incubator 1. The air (from which ethanol has been removed) exhausted to the bottom of the bed 11 is sucked in by the fan 20 together with the steam generated by the heating part 18. Thus, the exhaust direction of the purification device 120 coincides with an intake direction in the incubator 1.

Moreover, inside the incubator 1, air circulated inside the incubator 1 is sucked to the bottom of the bed 11 through the gap between the screen part 12 of the bed 11 and the inner wall surface of the housing chamber 101. Thus, if there is a sufficient gap between the screen part 12 of the bed 11 and the inner wall surface of the housing chamber 101, the purification device 120 is preferably installed on the screen part 12 of the bed 11. This allows the exhaust direction of the purification device 220 and the circulating direction of the air circulated inside the incubator 1 to be the same.

As described above, the first removal part 124 in the first enclosure 121, by using the sheet-shaped activated charcoal as an adsorbent, quickly adsorbs a large amount of ethanol with high concentration, and the second removal part 126 in the second enclosure 122, by using the pellet-shaped activated charcoal as an adsorbent, slowly but thoroughly adsorbs any ethanol that has not been completely adsorbed by the first removal part 114.

That is, as shown in FIG. 9, the first removal part 124 is arranged on a side closer to the intake part 121b than the second removal part 126. That is, since the first removal part 124 is arranged on the upstream side of air flow sucked in by the suction part 125 and the second removal part is arranged on the downstream side, the air sucked in from the intake part 12b is removed of ethanol by the first removal part 124 arranged on the side closer to the intake part 121b (upstream side of the air flow) and then removed of ethanol by the second removal part 126 arranged on the downstream side of the air flow, so that any ethanol that has not been completely removed by the first removal part 124 can be removed by the second removal part 126.

One of the conditions for achieving adsorption characteristics of the sheet-shaped activated charcoal used in the above-mentioned first removal part 124 is that it has a large surface area in contact with the air being sucked in.

Thus, the outside air taken in from the intake part 121b of the first enclosure 121 has a large amount of ethanol quickly adsorbed by the first removal part 124, and further, any remaining ethanol is thoroughly adsorbed by the second removal part 126, so that the outside air exhausted from the exhaust part 122b contains almost no ethanol.

The purification device 120 is preferably installed inside the housing chamber 101 of the incubator 1, as shown in FIG. 1. In this way, by installing the purification device 120 inside the housing chamber 101, ethanol can be removed from the air inside the housing chamber 101. This makes it possible to avoid the infant patient X inside the housing chamber 101 of the incubator 1 from being unintentionally exposed to ethanol.

Usually, in the incubator 1, the temperature and humidity of the air inside the housing chamber 101 are adjusted. Thus, as described above, the purification device 120 takes in the air inside the housing chamber 101, guides the air, from which a large amount of ethanol has been quickly removed by the first removal part 124 of the first enclosure 121, to the second removal part 126 in the second enclosure 122, and exhausts the air, from which ethanol has been thoroughly removed by the second removal part 126, into the housing chamber 101. This makes it possible to remove ethanol from the housing chamber 101 while maintaining the temperature and humidity inside the housing chamber 101.

It should be noted that in the above-described fourth embodiment, the purification device 120 is described, in which the first enclosure 121 comprising the suction part 125 and the second enclosure 122 comprising the second removal part 126 are integrated. In this case, even if efforts are made to slim down each enclosure, it may be difficult to slim down the fan that constitutes the suction part 125 contained in the first enclosure 121, and therefore, it may be difficult to install the purification device 120 on the screen part 12 of the bed 11 inside the housing chamber 101 depending on the incubator 1. Therefore, in a fifth embodiment below, a purification device is described that can exhaust purified air to the bed 11 even when the space between the screen part 12 of the bed 11 and the housing chamber 101 in the incubator 1 is small.

### [Fifth embodiment]

Another embodiment of the present invention will be described below. It should be noted that for ease of explanation, the same reference numerals are given to members having the same functions as those described in the above-described embodiments, and their explanations are not repeated.

### <Overview of purification device>

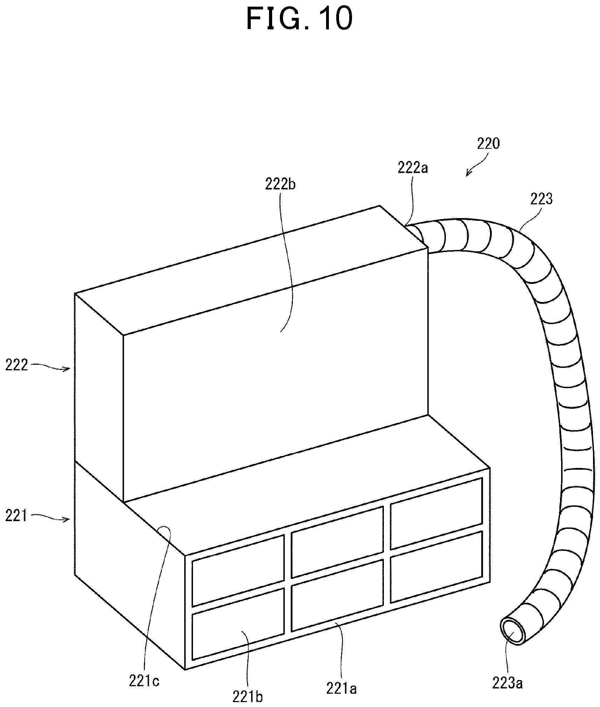

FIG. 10 is a schematic perspective view of a purification device 220 according to this embodiment. The purification device 220 has almost the same structure as the purification device 120 of the first embodiment, except for a structure for exhausting outside air from which ethanol has been removed. Here, correspondence between each element constituting the purification device 220 and each element constituting the purification device 120 of the first embodiment is as follows. A first enclosure 221 corresponds to the first enclosure 121, a second enclosure 222 corresponds to the second enclosure 122, a front surface 221a corresponds to the front surface 121a, an intake part 221b corresponds to the intake part 121b, and an upper surface 221c corresponds to the bottom surface 121c. Furthermore, the first enclosure 221, like the first enclosure 121, comprises a first removal part 124 and a suction part 125 therein, and the second enclosure 222, like the second enclosure 122, comprises a second removal part 126 therein. However, in the second enclosure 222, the outside air after absorbing ethanol is exhausted from a tube 223 provided on a side surface 222a. The tube 223 is a flexible tube having a predetermined length and allows an exhaust port 223a to be directed in a desired direction.

The purification device 220 having the above-described configuration is arranged under the bed 11 in the housing chamber 101 with the first enclosure 221 being on the lower side, and further, the exhaust port 223a of the tube 223 is also arranged under the bed 11. Here, the exhaust port 223a is arranged so that a direction in which the air is exhausted, that is, an exhaust direction, is the same as a direction in which the air circulates inside the housing chamber 101. This allows the purification device 220 to suck in air containing ethanol under the bed 11 and circulate the air, from which ethanol has been removed, under the bed 11 inside the housing chamber 101.

Moreover, since the purification device 220 is used while being placed under the bed 11, it is possible to enlarge the fan in the suction part 125, allowing for improved suction power. In other words, within a range so that the purification device 220 can be placed in a space under the bed 11 inside the housing chamber 101, it is possible to increase the size of the fan in the suction part 125 and improve the suction power. As such, by placing the purification device 220 under the bed 11, it is not required to install the purification device 220 on the screen part 12 of the bed 11. Thus, placing the purification device 220 under the bed 11 is appropriate when the gap between the screen part 12 of the bed 11 and the inner peripheral surface of the housing chamber 101 is not large, i.e., when it is spatially difficult to install the purification device 220 on the screen part 12.

### [Sixth embodiment]

Another embodiment of the present invention will be described below. It should be noted that for ease of explanation, the same reference numerals are given to members having the same functions as those described in the above-described embodiments, and their explanations are not repeated.

### <Overview of purification device>

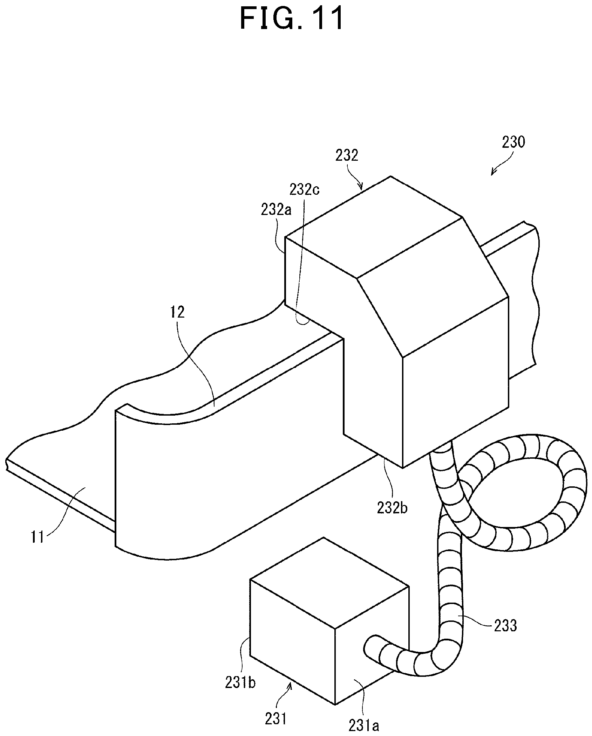

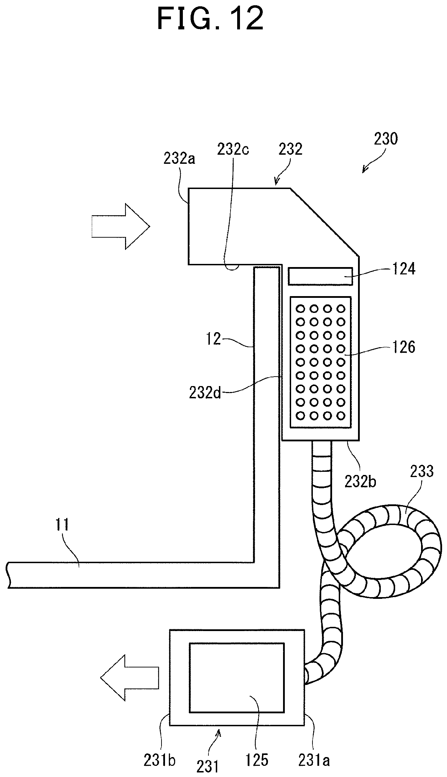

FIG. 11 is a perspective view of a purification device 230 according to the present embodiment. FIG. 12 is a schematic cross-sectional view of the purification device shown in FIG. 11. Although, in the above-described fifth embodiment, the example of the configuration in which the first enclosure 221 and the second enclosure 222 of the purification device 220 are integrated is described, the configuration is not limited to this, and it may be a configuration such as that of the purification device 230 shown in FIGS. 11 and 12. The purification device 230 has a structure in which a first enclosure 231 and a second enclosure 232 are separated and connected by a tube 233. The first enclosure 231 of the purification device 230 corresponds to the first enclosure 221 of the purification device 220, and the second enclosure 232 corresponds to the second enclosure 222.

The first enclosure 231 comprises a suction part 125, which sucks in air from a front surface 231a and exhausts it from a rear surface 231b side. An opening (not shown) that communicates with the inside of the first enclosure 231 is formed on the front surface 231a of the first enclosure 231, and a tube 233 is connected to this opening. The tube 233 is the same as the tube 223 of the purification device 220 shown in FIG. 10.

The second enclosure 232 has a substantially L-shaped cross section and comprises a first removal part 124 and a second removal part 126, which exhaust air, introduced from a front surface 232a, from a rear surface 232b through the first removal part 124 and the second removal part 126. An opening (not shown) that communicates with the inside of the second enclosure 232 is formed on the rear surface 232b of the second enclosure 232, and the tube 233 is connected to this opening. Thus, air exhausted from the second enclosure 232 is sucked in by the first enclosure 231 through the tube 233.

It should be noted that the first removal part 124 adsorbs ethanol using the same sheet-shaped activated charcoal as for the first removal part 124 in the fourth embodiment, and the second removal part 126 adsorbs ethanol using the same pellet-shaped activated charcoal as for the second removal part 126 in the first embodiment. Moreover, in the first removal part 124 and the second removal part 126, in order to remove ethanol, ethanol may not only be adsorbed using an adsorbent but also be decomposed using a catalyst.

The first enclosure 231 is installed under the bed 11, i.e., below the placing surface, and the second enclosure 232 is installed on the screen part 12 of the bed 11, i.e., above the placing surface. In this case, the second enclosure 232 is installed with a side surface 232d thereof being close to the screen part 12. At this time, a protrusion part, which is the same as the protrusion part 121d described in the first embodiment, is provided on a bottom surface 232c on the upper side of the second enclosure 232, and the second enclosure 232 is fixed to the screen part 12 by this protrusion part. Thus, in the state shown in FIG. 12, the purification device 230 sucks in air containing ethanol from the front surface 232a of the second enclosure 232, and the air, from which ethanol has been removed by the first removal part 124 and the second removal part 126 in the second enclosure 232, is sucked in by the suction part 125 of the first enclosure 231 through the tube 233 and is exhausted from the rear surface 231b of the first enclosure 231 into a space below the bed 11.

According to the purification device 230 having the above-described configuration, the enclosure size of the first enclosure 231 including the suction part 125 is not limited by a size between the screen part 12 and the peripheral wall of the housing chamber 101 of the incubator 1, and the size of the fan can be increased by enlarging the suction part 125, thereby increasing the suction amount. Furthermore, the sizes of first removal part 124 and second removal part 126 in the second enclosure 232 can be increased, making it possible to increase the amount of ethanol to be adsorbed and increase durability of the adsorbent.

Moreover, a corner of a part bent in the second enclosure 232 (a site facing a part where the bottom surface 232c and the side surface 232d intersect with each other) is chamfered. A range can be thereby widened in which the second enclosure 232 is swung between the screen part 12 and the peripheral wall of the housing chamber 101.

### (Drive control of purification device)

The purification devices 120, 220, and 230 of the fourth, fifth and sixth embodiments are configured to drive and stop the fan in the suction part 125 therein by turning a power source on and off. This power source may be a battery (a primary battery, a rechargeable battery, or the like), an external power source, or a combination of the external power source and the rechargeable battery. In the case where the purification device is installed inside the incubator each time it is used, the battery is preferable as the power source, and in the case where the purification device is installed in the incubator all the time, the external power source is preferable. Usually, the purification device is permanently installed inside the incubator, and when it is operated continuously, the power source is preferably the external power source. Usually, when treatment is performed on the infant patient X inside the housing chamber 101, a practitioner (a doctor or nurse) turns on the power source to drive the fan of the suction part 125. Moreover, a suction power in the purification devices 120, 220, and 230 can be adjusted by a rotation speed of the fan in the suction part 125, so that ethanol can be appropriately sucked in and removed by changing the rotation speed of the fan depending on a concentration of ethanol to be removed.

Furthermore, the purification devices 120, 220, and 230 of the fourth, fifth and sixth embodiments each have a function of displaying an operating status (a driving status). The function of displaying the operating status refers to explicitly displaying whether the device is operating or not, whether the device is stopped or not, whether a filter (an activated charcoal in a removal part) needs to be replaced or not, whether a trouble occurs or not, whether a battery is lowered or not, or the like. In this case, the driving status may be displayed on a display panel or may be indicated by turning on a lamp corresponding to the driving status. This prevents the practitioner from forgetting to operate the purification devices 120, 220, and 230. In addition, the purification devices 120, 220, and 230 can provide a display encouraging replacement of the filter.

Furthermore, it is preferable that the purification devices 120, 220, and 230 of the fourth, fifth and sixth embodiments are easy to be taken in and out from the opening 101a of the incubator 1 and have a mass for easy handling (e.g., 150 g).

### (Effect of incubator 1)

The incubator 1 having the above-described configuration comprises an ethanol removal device 110 and a purification device 120 as removal parts for removing ethanol from air inside the housing chamber 101. The incubator 1 also comprises a circulating part 410 for circulating air through the housing chamber 101, a supplying part 420 that can supply the air from the outside to the inside of the housing chamber 101, and a discharging part 430 that can discharge at least a part of the air inside the housing chamber 101 to the outside of the housing chamber 101. The incubator 1 can supply the air from the outside to the inside of the housing chamber 101 to reduce a concentration of ethanol from the air inside the housing chamber 101. The incubator 1 can also remove ethanol from the air inside the housing chamber 101 by the ethanol removal device 110 and the purification device 120 that are the removal parts, while circulating the air inside the housing chamber 101. This makes it possible to avoid the infant patient X inside the incubator 1 from being unintentionally exposed to ethanol.

It should be noted that in the first embodiment, the example is described in which the incubator 1 comprises the circulating part 410, the supplying part 420, and the discharging part 430 that constitute an air conditioner, and the removal parts (the ethanol removal device 110, the purification device 120). However, the removal parts may also be incorporated into the incubator 1. For example, a heater for adjusting temperature and humidity is provided on the back side of the bed in the incubator 1 (the side opposite to where the infant patient X is sleeping), and one purification device 120 may be provided near the heater.

Moreover, at least one of the ethanol removal device 110 and the purification device 120 as the removal part may be arranged in the circulating part 410 shown in FIG. 1. In this case, the circulating part 410 is already provided with a suction part, and therefore, it is sufficient to arrange an adsorbent that adsorbs ethanol or a catalyst that decomposes ethanol on a flow channel for air inside the circulating part 410.

In the following seventh embodiment, an example will be described in which each part that constitutes an air conditioner (a circulating part 410, a supplying part 420, a discharging part 430) and removal parts (an ethanol removal device 110, a purification device 120) are provided outside the incubator 1.

### [Seventh embodiment]

Another embodiment of the present invention will be described below. It should be noted that for ease of explanation, the same reference numerals are given to members having the same functions as those described in the above-described embodiments, and their explanations are not repeated.

### <Incubation system>

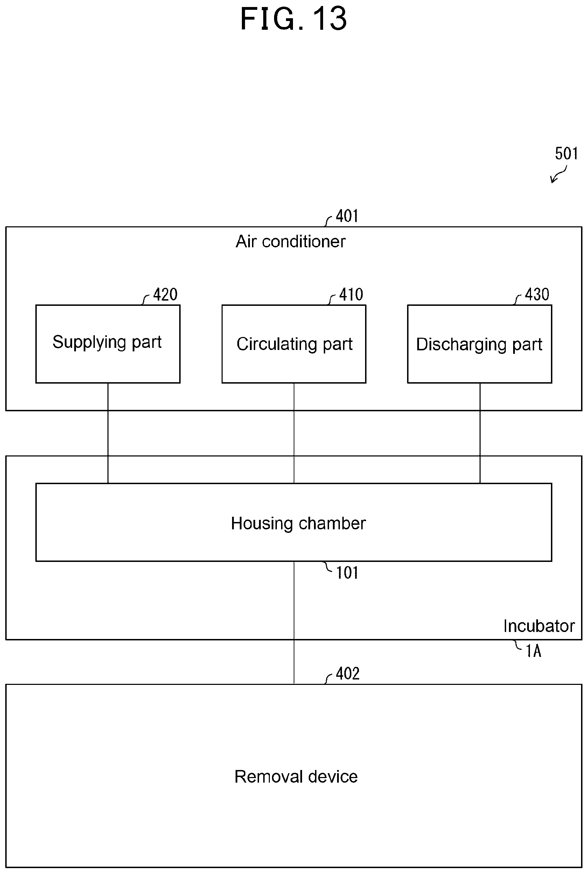

FIG. 13 is a schematic block diagram of an incubation system 501 according to the seventh embodiment. It should be noted that a configuration of the incubation system 501 shown in FIG. 13 is an example and may take various forms. As shown in FIG. 13, the incubation system 501 comprises an incubator 1A, an air conditioner 401, and a removal device (removal mechanism) 402. Although the incubator 1A has a configuration substantially identical to that of the incubator 1 in the first embodiment, the incubator 1A differs from the incubator 1 in that the air conditioner 401 for adjusting temperature and humidity of air inside the housing chamber 101 and the removal device 402 for removing ethanol contained in the air inside the housing chamber 101 are provided separately from the incubator 1.

The air conditioner 401 comprises a circulating part (circulating mechanism) 410, a supplying part (supplying mechanism) 420, and a discharging part (discharging mechanism) 430. Descriptions of functions of the circulating part 410, the supplying part 420, and the discharging part 430 are omitted here, as they are already described in the first embodiment. The air conditioner 401 and the housing chamber 101 in the incubator 1A are connected to each other by an air tube, through which air whose temperature and humidity have been adjusted by the circulating part 410 is sent to the housing chamber 101. On the other hand, the supplying part 420 of the air conditioner 401 supplies fresh air (clean air: medical gas) to the housing chamber 101 through the air tube, and the discharging part 430 of the air conditioner 401 discharges at least a part of the air inside the housing chamber 101 to the outside of the housing chamber 101 through the air tube. The discharging part 430 discharges approximately the same amount of air as an amount of air supplied from the supplying part 420 to the housing chamber 101. Thus, if ethanol is contained in the air inside the housing chamber 101, the ethanol will be discharged together with the air from the discharging part 430, so that the concentration of ethanol in the housing chamber 101 can be reduced. As such, by using the air conditioner 401, it is possible to reduce the concentration of ethanol in the housing chamber 101 to a certain extent. However, in order to actively reduce the concentration of ethanol in the housing chamber 101, it is necessary to use the removal device 402.

The removal device 402 is connected to the housing chamber 101 through an air tube, like the air conditioner 401, takes in air inside the housing chamber 101, removes ethanol contained in the taken-in air, and directs the air, from which ethanol has been removed, back into the housing chamber 101. In this way, by actively removing ethanol inside the housing chamber 101 by the removal device 402, the concentration of ethanol in the housing chamber 101 can be significantly reduced.

The removal device 402 has, as a basic structure, an intake part, like the ethanol removal device 110 and the purification device 120, in which it adsorbs and removes ethanol contained in air taken in from the housing chamber 101 by the intake part using a pellet-shaped activated charcoal or the like, and returns the air, from which ethanol has been adsorbed and removed, to the housing chamber 101.

In addition, with the removal device 402 provided outside the housing chamber 101, it is not necessary to arrange the removal device 402 inside the housing chamber 101, as shown in FIG. 1. This increases a space for treating the infant patient X in the housing chamber 101, allowing for easy treatment.

According to the incubation system 501 having the above-described configuration, the removal device 402 can remove ethanol from air inside the housing chamber 101, while supplying the air outside the housing chamber 101 into the housing chamber 101 by the air conditioner 401 to reduce the concentration of ethanol in the air inside the housing chamber 101. This allows the concentration of ethanol in the housing chamber 101 of the incubator 1A to be significantly reduced, so that the infant patient X in the incubator 1A can be avoided from being unintentionally exposed to ethanol.

### [Eighth embodiment]

Another embodiment of the present invention will be described below. It should be noted that for ease of explanation, the same reference numerals are given to members having the same functions as those described in the above-described embodiments, and their explanations are not repeated.

### (Overview of incubator)

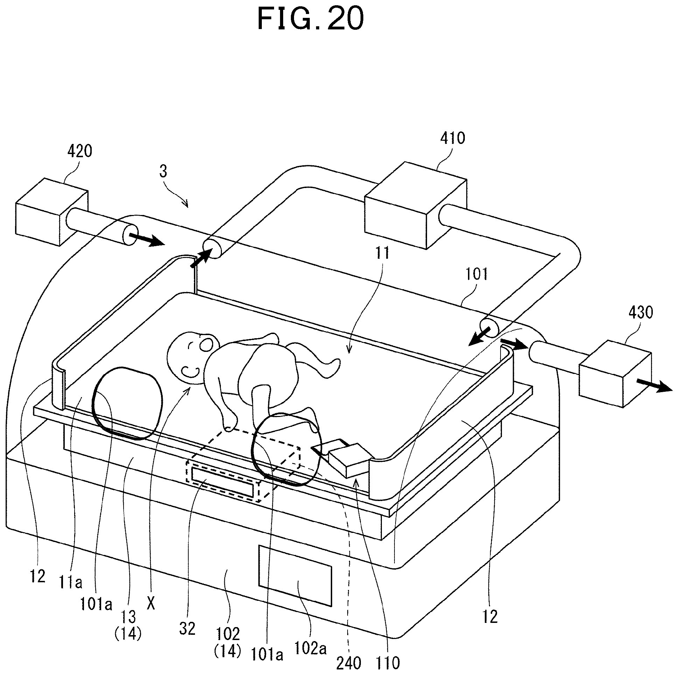

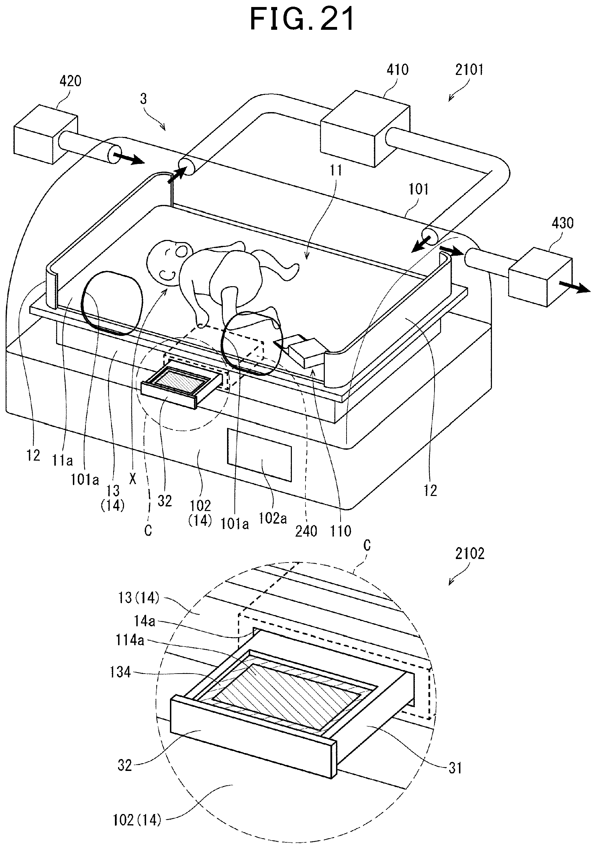

FIG. 20 is a schematic perspective view of a closed-type incubator 3 according to this embodiment. Moreover, 2101 in FIG. 21 is a schematic perspective view showing a state where a holder 31 provided in the incubator 3 shown in FIG. 20 is pulled out, and 2102 in FIG. 21 is a schematic perspective view with an enlarged area surrounded by a dashed line C shown in 2101 in FIG. 21.

As shown in FIG. 20, the incubator 3 has a structure in which it comprises a purification device 240 arranged below the surface 11a of the bed 11. That is, the incubator 3 has a structure in which the purification device 240 is provided integrally on an installation stand 14 on which the bed 11 is installed.

The installation stand 14 includes a loading stand 102 on which the housing chamber 101 is loaded, and a bed stage 13 which is provided on the loading stand 102 and on which the bed 11 is installed. In the illustrated example, a configuration is shown, in which the purification device 240 (first removal part 134) is provided below the upper surface (bed installation surface) of the installation stand 14 on which the bed 11 is installed, and inside the bed stage 13 of the installation stand 14.

The purification device 240 is configured to take in air inside the housing chamber 101, remove ethanol (volatile substances) contained in the taken-in air, and exhaust the air, from which ethanol has been removed, back into the housing chamber 101. The purification device 240 may be connected to the housing chamber 101 through, for example, an air tube (not shown). In this case, the purification device 240 takes in air inside the housing chamber 101 through an air tube for intake, and removes ethanol contained in the taken-in air. Moreover, the purification device 240 exhausts the air, from which ethanol has been removed, to the housing chamber 101 through an air tube for exhaust. In this way, by actively removing ethanol inside the housing chamber 101 by the purification device 240, the concentration of ethanol in the housing chamber 101 can be significantly reduced. In addition, as the purification device 240 is provided below the surface 11a of the bed 11, the space for treating the infant patient X on the surface 11a is increased, which makes the treatment easy.

As shown in FIG. 21, the purification device 240 comprises a first removal part (removal part) 134 including a crushed activated charcoal (adsorbent) 114a that adsorbs ethanol. In the incubator 3, it is possible to replace the activated charcoal 114a from outside the installation stand 14. The activated charcoal 114a can be thereby easily replaced even when the activated charcoal 114a is provided inside the installation stand 14. It should be noted that the first removal part 134 may be of a cartridge type in which the activated charcoal 114a is housed in a container. This makes it even easier to replace the activated charcoal 114a.

The installation stand 14 has a slidable holder 31 that holds the periphery edge of the first removal part 134, as an example of a mechanism for replacing the activated charcoal 114a from the outside. This holder 31 can be taken in and out from an opening 14a formed on the side surface of the installation stand 14. The activated charcoal 114a can be thereby replaced through the opening 14a of the installation stand 14.

Moreover, the installation stand 14 has a lid plate (closure plate) 32 that closes the opening 14a, and the inner surface of this lid plate 32 is connected to the holder 31. Therefore, the holder 31 slides in conjunction with the lid plate 32, so that the holder 31 is pulled out from the installation stand 14 by pulling the lid plate 32 from outside the installation stand 14 towards the front side. The first removal part 134 held by the holder 31 can be thereby easily removed from the installation stand 14.

It should be noted that it is preferable that the activated charcoal 114a (first removal part 134) has a size to be easily taken in and out from the opening 101a of the incubator 3 so that the activated charcoal 114a (first removal part 134) can be replaced from the opening 101a without opening the housing chamber 101.

Moreover, the purification device 240 may be provided inside the loading stand 102 of the installation stand 14. The activated charcoal 114a (first removal part 134) can be thereby replaced without using the opening 101a of the incubator 3, therefore making the replacement work even easier.

### (Effect of incubator)

As such, the incubator 3 comprises a housing chamber 101 capable of housing an infant patient X, a bed 11 having a surface 11a on which the infant patient X is placed, and a first removal part 134 that is provided below the surface 11a and removes volatile substances from air inside the housing chamber 101, the first removal part 134 including an activated charcoal 114a that adsorbs ethanol.

According to this embodiment, ethanol contained in air inside the housing chamber 101 can be removed by the first removal part 134. Moreover, the first removal part 134 is provided below the surface 11a of the bed 11, which therefore does not interfere with medical procedures on the infant patient X in the housing chamber 101.

### [Ninth embodiment]

Another embodiment of the present invention will be described below. It should be noted that for ease of explanation, the same reference numerals are given to members having the same functions as those described in the above-described embodiments, and their explanations are not repeated.

### (Overview of incubator)

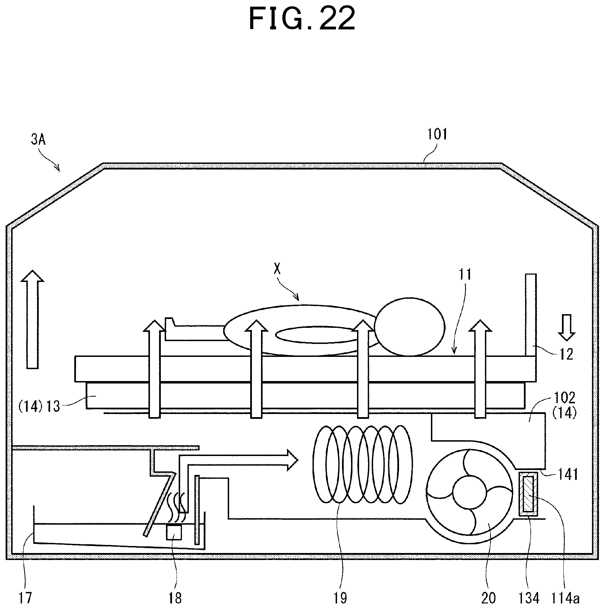

FIG. 22 is a cross-sectional view of an incubator 3A according to this embodiment. In the above-described eighth embodiment, the configuration example is described in which the purification device 240 is provided integrally with the installation stand 14. However, instead of the purification device 240, a first removal part 134 including an adsorbent 114a may be provided on the installation stand 14.

As shown in FIG. 22, the incubator 3A comprises a water tank 17, a heating part 18, a heater 19, a fan 20, and a first removal part 134, inside the installation stand 14. The water tank 17 houses water. The heating part 18 is provided inside the water tank 17 and generates steam by heating the water housed in the water tank 17. The steam generated by the heating part 18 is circulated inside the housing chamber 101 by the fan 20. The water tank 17, the heating part 18, the heater 19, and the fan 20 are examples of the circulating part 410. Moreover, the water tank 17 and the heating part 18 are examples of a humidifying means, and the heater 19 is an example of a heating means. In the incubator 3A, the first removal part 134 is provided in the same space as a space in which the humidifying means and the heating means that constitute the circulating part are provided.

Inside the incubator 3A, air circulated inside the incubator 3A is sucked to the bottom of the bed 11 through the gap between the screen part 12 of the bed 11 and the inner wall surface of the housing chamber 101. The first removal part 134 is provided on a flow channel 141 into which air flows after passing through the gap between the screen part 12 of the bed 11 and the inner wall surface of the housing chamber 101. Therefore, after ethanol is removed by the adsorbent 114a included in the first removal part 134, the air flowing through the flow channel 141 is exhausted by the fan 20 to the housing chamber 101 together with steam generated in the heating part 18.

The activated charcoal 114a can be replaced from outside the installation stand 14. The activated charcoal 114a can be thereby easily replaced even when the activated charcoal 114a is provided inside the installation stand 14. Examples of a mechanism for replacing the activated charcoal 114a from outside the installation stand 14 include, for example, the above-mentioned slidable holder 31 and the like.

It should be noted that in the illustrated example, a configuration is shown in which the first removal part 134 is provided on the upstream side of the fan 20 with respect to a flowing direction of air flowing through the flow channel 141, for example, on the side opposite to the heater 19 across the fan 20. However, the first removal part 134 may be provided on the downstream side of the fan 20 with respect to the flowing direction, for example, between the heater 19 and the fan 20.

### (Effect of incubator)

As such, the incubator 3A comprises a housing chamber 101 capable of housing an infant patient X, a bed 11 having a surface 11a on which the infant patient X is placed, and a first removal part 134 that is provided below the surface 11a and removes volatile substances from air inside the housing chamber 101, the first removal part 134 including an activated charcoal 114a that adsorbs ethanol.

According to this embodiment, ethanol contained in air inside the housing chamber 101 can be removed by the first removal part 134. Moreover, the first removal part 134 is provided below the surface 11a of the bed 11, which therefore does not interfere with medical procedures on the infant patient X in the housing chamber 101.

Furthermore, in the incubator 3A, the fan 20 for circulating air inside the incubator 3A also serves as a suction part that sucks in the air containing ethanol and guides it to the first removal part 134. Therefore, there is no need to provide a suction part separately, and the device configuration of the incubator 3A can be simplified.

### [Variation 1]

While in the above-described first embodiment, the example is described in which the housing chamber 101 is provided with two openings 101a for treatment, the number of openings 101a may be three or more as long as it is at least two.

### [Variation 2]

While in the above-described first embodiment, the example of performing a drive control of the ethanol removal device 110 by operation of an operation part provided on each device is described, the drive control may also be performed by operation of the operation panel 102a provided on the incubator 1.

### [Variation 3]

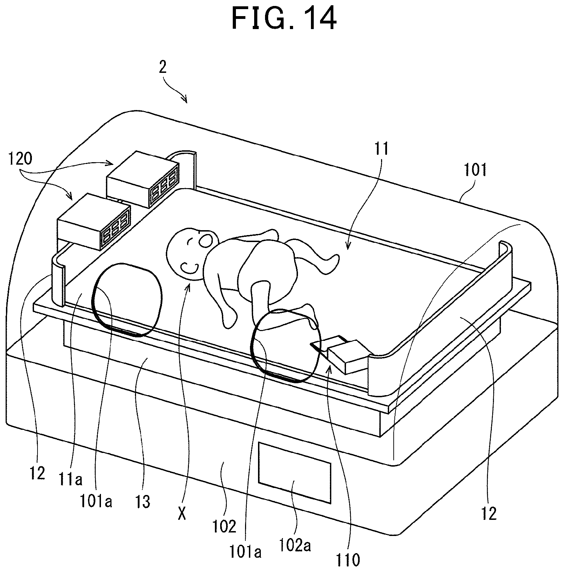

While in the above-described first embodiment, as shown in FIG. 1, the incubator 1 conducts air circulation inside the incubator 1 by the circulating part 410, air supply into the incubator 1 from the supplying part 420, and air discharge outside the incubator 1 from the discharging part 430, on the upper side of the bed 11 of the housing chamber 101. That is, a main air circulation in the incubator 1 shown in FIG. 1 is conducted on the upper side of the bed 11 of the housing chamber 101. Therefore, there is a possibility that the air flow may have an influence on a temperature change inside the incubator 1 for the infant patient X on the bed 11 of the housing chamber 101. In order to reduce the influence on the temperature change due to air flow on the infant patient X on the bed 11 of the housing chamber 101, it is preferable, for example, as in an incubator 2 shown in FIG. 14, to conduct air circulation inside the incubator 2, air supply into the incubator 2, and air discharge outside the incubator 2, on the lower side of the bed 11 of the housing chamber 101. It should be noted that for a discharging direction of air from inside the incubator 2 to outside the incubator 2, it is preferable to discharge the air in a direction that does not inhibit a circulating direction of the air inside the incubator 2 (for example, the same direction as the circulating direction).

In the incubator 2 shown in FIG. 14, a circulating part 410 and a supplying part 420, which are the same as those in FIG. 1, are arranged on the bottom of the bed 11, although they are not shown in the figure. It should be noted that in the incubator 2 shown in FIG. 14, no device is provided for actively discharging the air in the incubator 2 to the outside, like the discharging part 430 shown in FIG 1 of the above-described first embodiment, and instead, the air in the incubator 2 is discharged to the outside through the opening 101a of the housing chamber 101, a small gap between the housing chamber 101 and the loading stand 102, or the like.

In the incubator 2 shown in FIG. 14, the air adjusted in temperature and humidity by the circulating part 410 located on the bottom of the bed 11 is guided along the inner wall on the long side of the incubator 2 from the bottom of the bed 11 to the top of the housing chamber 101. Moreover, in the incubator 2, the air above the bed 11 is guided along the inner wall on the short side of the incubator 2 to the circulating part 410 on the bottom of the bed 11. As such, in the incubator 2, the air circulates so as to reduce the influence on the temperature change on the infant patient X due to the air flow.

Thus, in the incubator 2 shown in FIG. 14, it becomes possible to keep the air inside the incubator 2 clean and appropriately maintain the temperature and humidity of the air, with the influence of the air flow inside the incubator 2 on the infant patient X in the housing chamber 101 being reduced.

### [Variation 4]

While in the above-described first embodiment, the example is described in which the intake parts 111c provided in the ethanol removal device 110 are arranged in parallel in the longitudinal direction of the front surface 111a of the enclosure 111, it is not limited to this, and as long as air can be taken in, the intake parts 111c may be provided anywhere and may have any structure. Moreover, in the above-described first embodiment, the example is described in which the exhaust part 111d provided in the ethanol removal device 110 is provided on the rear surface 111b of the enclosure 111, it is not limited to this, and as long as air can be exhausted, the exhaust part 111d may be provided anywhere and may have any structure. Furthermore, the guiding part 112 provided in the ethanol removal device 110 may have any structure as long as it can guide air to the intake parts 111c.

### [Variation 5]

In the above-described first embodiment, the example is described in which the first removal part 114 is of a cartridge type and is detachable from the enclosure 111. Similarly, the second removal part 116 is preferably of a cartridge type. In this case, the cartridge-type second removal part 116 is detachable from the upper surface of the enclosure 111, like the first removal part 114. As such, if the first removal part 114 and the second removal part 116 are both of cartridge types, they are easily detached from the enclosure 111 as well, so that it is easy to replace an adsorbent in each removal part.

### [Variation 6]

In the above-described first embodiment, since the direction of the air flowing through the first removal part 114 and the suction part 115 is the direction perpendicular to the rotation axis direction of the fan, the sirocco fan is used as the fan used for the suction part 115; however, it is not limited to this. For example, if the direction of the air flowing through the first removal part 114 and the suction part 115 is the same direction as the rotation axis direction of the fan, an axial fan is used as the fan used for the suction part 115. As such, other types of fans may be used depending on the arrangement positions of the first removal part 114 and the suction part 115. Moreover, the number of fans used in the suction part 115 is not limited to two, and may be one, or three or more. Furthermore, the type and number of fans may be appropriately determined taking into consideration required air volume, battery, and power consumption.

### [Variation 7]

While in the above-described first embodiment, the example is described in which the loading part 112a of the guiding part 112 is formed integrally with the enclosure 111, it may be formed separately from the enclosure 111 and formed to be connectable to the enclosure 111. In the case where the loading part 112a is formed separately from the enclosure 111, loading parts 112a of different sizes and shapes can be prepared, and an ethanol removal device 110 according to the installation environment can be provided. Moreover, a shape and size of the loading part 112a are not particularly limited.

### [Variation 8]

While in the above-described first embodiment, the example is described in which there are two wall parts 112b, as long as the wall parts 112b are formed excluding the part opposite the intake parts 111c, the number of wall parts is not limited to two and may be one. That is, it is sufficient that the guiding part 112 has at least one wall part 112b.

Moreover, in the above-described first embodiment, the example is described in which the wall part 112b has a shape that is highest on the front surface 111a side of the enclosure 111 and becomes lower as it extends away from the front surface 111a; however, it is not limited to this shape. For example, when taking into consideration ease of introducing air into the intake parts 111c, the height of the wall part 112b on the front surface 111a side of the enclosure 111 may be configured to be the same as a height at a position farthest from the front surface 111a. Moreover, when taking into consideration ease of treatment on the loading part 112a, it is preferable to shape the wall part 112b to be as low as possible.

As described in the above-described first embodiment, the wall part 112b may be formed of the same type of material as the loading part 112a or may be formed of a different type of material. Further, as described in the above-described first embodiment, the wall part 112b may be formed integrally with the loading part 112a or may be formed separately from the loading part 112a. Moreover, in the case where the wall part 112b is formed separately from the loading part 112a, it may be detachable from the loading part 112a. In addition, the guiding part may have a structure in which the top surface of the enclosure 111 is extended a little to the loading part 112a side (protruding structure). In this manner, air is efficiently guided to the intake parts 111c by the guiding part.

### [Variation 9]

In the above-described second embodiment, the shapes of the first wall part 212b and the second wall part 212c of the guiding part 212 are the same as the wall part 112b provided in the guiding part 112 in the first embodiment; however, they are not limited to this shape. For example, when taking into consideration ease of introducing air into the intake parts 111c, the height of the first wall part 212b on the front surface 111a side of the enclosure 111 may be configured to be the same as a height at a position farthest from the front surface 111a. Moreover, when taking into considering ease of treatment on the loading part 212a, the first wall part 212b and the second wall part 212c may be shaped to be as low as possible.

The second wall part 212c may have the same shape as the first wall part 212b or may have a different shape, as long as it does not interfere with treatment. Further, the lower the height of the second wall part 212c is, the easier it is to perform treatment on the loading part 212a. Moreover, the number of second wall parts 212c provided is not limited to five, and may be less than five or more than five. Moreover, in the case where the first wall part 212b and the second wall part 212c are formed separately from the loading part 212a, they may be detachable from the loading part 212a. Moreover, the second wall part 212c may be provided only in a part of the loading part 212a (for example, in the vicinity of the first wall part 212b). In this manner, air becomes easily guided to the intake parts 111c while securing a space on the loading part 212a to easily place a treatment subject, making it possible to remove ethanol contained in the air in a short period of time.

### [Variation 10]

In the ethanol removal devices 110 and 210 of the above-described first and second embodiments, the guiding part 112 and the enclosure 111, as well as the guiding part 212 and the enclosure 111, are usually used in a state where they are loaded on the surface 11a of the bed 11; however, they are not limited to this. For example, air containing ethanol generated from a source of ethanol (e.g., alcohol swab) loaded on the loading part 112a and the loading part 212a may be guided to the intake parts 111c, by keeping a state where the tips of the guiding part 112 of the ethanol removal device 110 and the guiding part 212 of the ethanol removal device 210 are brought into contact with the surface 11a of the bed 11, and the ethanol removal device 110 and the ethanol removal device 210 are tilted at a predetermined angle θ (0≤<θ<90°) from the surface 11a.

### [Variation 11]

In the above-described third embodiment, as shown in FIG. 6, the alcohol swab Y is loaded directly on the bed 11; however, it is not limited to this. The air containing ethanol may be guided to the intake parts 111c by the guiding part 112 by loading the alcohol swab Y on a tray (not shown) and loading the tray on the bed 11.

### [Variation 12]

While in the above-described third embodiment, the example is described in which two wall parts 112b are formed, as long as the wall parts 112b are formed excluding the part opposite the intake parts 111c, the number of wall parts is not limited to two and may be one. That is, it is sufficient that the guiding part 112 has at least one wall part 112b surrounding a predetermined area Z of the surface of the bed 11 on which the alcohol swab Y is loaded.

Moreover, in the above-described third embodiment, the example is described in which the wall part 112b has a shape that is highest on the front surface 111a side of the enclosure 111 and becomes lower as it extends away from the front surface 111a; however, it is not limited to this. For example, when taking into consideration ease of introducing air into the intake parts 111c, the height of the wall part 112b on the front surface 111a side of the enclosure 111 may be the same as the height at the position farthest from the front surface 111a. Moreover, when taking into consideration ease of treatment on the surface on which the alcohol swab Y is loaded, with the guiding part 112 loaded on the surface 11a of the bed 11, it is preferable to shape the wall part 112b to be as low as possible. Moreover, the wall part 112b may be detachable from the enclosure 111.

In order to securely guide air to the intake parts 111c of the enclosure 111, it is sufficient that at least a part of the guiding part 112 is connected to the intake parts 111c. Specifically, it is sufficient that ends of the wall parts 112b of the guiding part 112 on the front surface 111a side are connected to the intake parts 111c. In this case, the air guided to the intake parts 111c by the guiding part 112 is less likely to leak between the end of the wall part 112b of the guiding part 112 on the front surface 111a side and the intake parts 111c, and a large amount of air is guided to the intake parts 111c. That is, at least the part of the guiding part 112 is connected to the intake part 111c, so that the air can be securely guided to the intake part 111c. Moreover, the guiding part may have a structure in which the top surface of the enclosure 111 is extended a little to the loading part (for example, the surface 11a of the bed 11) side (protruding structure). In this manner, the air can be efficiently guided to the intake parts 111c.

### [Variation 13]

In the above-described third embodiment, as an example of use of the ethanol removal device 110A, as shown in FIG. 7, the example is described in which the ethanol removal device 110A is used with the tip of the wall part 112b of the guiding part 112 brought into contact with the surface 11a of the bed 11 and with being tilted at a predetermined angle θ (0≤<θ<90°) from the surface 11a; however, it is not limited to this. For example, since only the wall part 112b is formed on the guiding part 112 of the ethanol removal device 110A, the ethanol removal device 110A may be used with the tip of the wall part 112b brought into contact with the surface 11a of the bed 11 and with being tilted at a predetermined angle θ (90°<θ≤180°) from the surface 11a of the bed 11. That is, the ethanol removal device 110A may be used to guide the air to the intake parts 111c from the direction that is not perpendicular to the surface 11a of the bed 11.

### [Variation 14]

While in the above-described third embodiment, the example of one removal part, i.e. the first removal part 114, as the removal part provided in the ethanol removal device 110A is described, it is not limited to this, and the number of removal parts may be two or more.

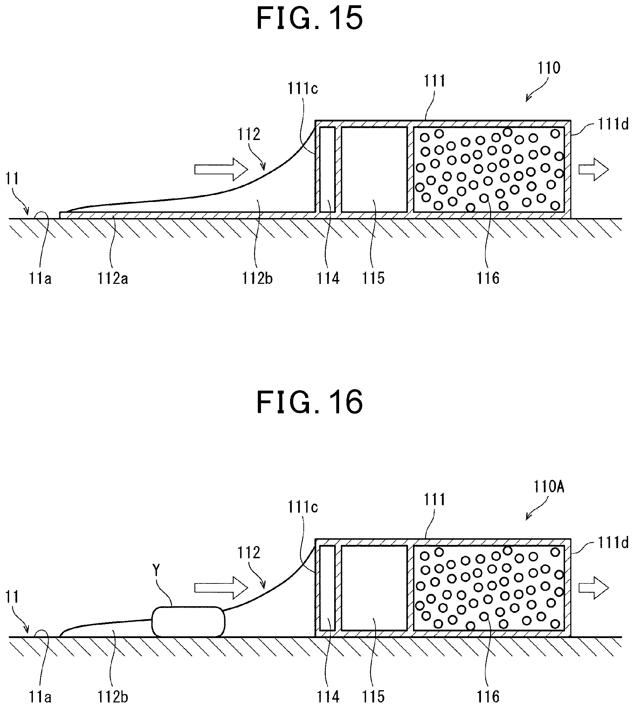

As shown in FIG. 16, the first removal part 114 comprises a sheet-shaped activated charcoal and quickly adsorbs most of ethanol contained in air taken in from the intake parts 111c. Thus, if the amount of ethanol contained in the air is small, all of ethanol would be adsorbed by the first removal part 114.

The second removal part 116 comprises a pellet-shaped activated charcoal, and slowly and securely adsorbs ethanol contained in air taken in from the suction part 115. The air, in which the ethanol has been adsorbed by the second removal part 116, is exhausted from the exhaust part 111d provided on the rear surface 111b of the enclosure 111.

As described above, the first removal part 114 uses a sheet-shaped activated charcoal as an adsorbent to quickly adsorb a large amount of ethanol with high concentration, and the second removal part 116 uses a pellet-shaped activated charcoal as an adsorbent to slowly adsorb any ethanol that has not been completely adsorbed by the first removal part 114.

Thus, the air taken in from the intake parts 111c of the enclosure 111 has a large amount of ethanol quickly adsorbed by the first removal part 114, and further, the ethanol is thoroughly adsorbed by the second removal part 116, so that the ethanol in the air taken in from the intake parts 111c can be sufficiently removed.

### [Variation 15]

In the above-described third embodiment, as in the above-described first embodiment, since the direction of the air flowing through the first removal part 114 and the suction part 115 is a direction perpendicular to the rotation axis direction of the fan, the sirocco fan is used as the fan used for the suction part 115; however, it is not limited to this. For example, if the direction of the air flowing through the first removal part 114 and the suction part 115 is the same direction as the rotation axis direction of the fan, an axial fan is used as the fan used for the suction part 115. As such, other types of fans may be used as the fan used for the suction part 115 depending on the arrangement positions of the first removal part 114 and the suction part 115. Moreover, the number of fans used in the suction part 115 is not limited to two, and may be one, or three or more. Furthermore, the type and number of fans may be appropriately determined taking into consideration required air volume, battery, and power consumption.

### [Variation 16]

While in the above-described first to third embodiments, the example of one removal part, i.e. the first removal part 114, as the removal part provided in the ethanol removal devices 110, 210, and 110A is described, it is not limited to this, and the number of removal parts may be two or more.

For example, as shown in FIG. 15, the first removal part 114, the suction part 115, and the second removal part 116 may be arranged inside the enclosure 111 in this order from the intake part 111c side toward the exhaust part 111d.

The first removal part 114 comprises a sheet-shaped activated charcoal and, compared to the second removal part 116, quickly adsorbs most of ethanol contained in air taken in from the intake parts 111c. In other words, the first removal part 114 has a higher adsorption performance than the second removal part 116 in terms of adsorption speed. Thus, if the amount of ethanol contained in the air is small, all of ethanol would be adsorbed in the first removal part 114. However, since the first removal part 114 comprises the sheet-shaped activated charcoal, its adsorption performance is more easily deteriorated in terms of durability, compared to the second removal part 116.

On the other hand, the second removal part 116 comprises a pellet-shaped activated charcoal and, compared to the first removal part 114, slowly adsorbs ethanol contained in air taken in from the suction part 115. In other words, the second removal part 116 has a lower adsorption performance than the first removal part 114 in terms of adsorption speed. However, since the second removal part 116 comprises the pellet-shaped activated charcoal, its adsorption performance is less likely to be deteriorated in terms of durability, compared to the first removal part 114. The air, in which ethanol has been adsorbed by the second removal part 116, is exhausted from the exhaust part 111d provided on the rear surface 111b of the enclosure 111.

As described above, the first removal part 114 uses the sheet-shaped activated charcoal as an adsorbent to quickly adsorb a large amount of ethanol with high concentration, and the second removal part 116 uses the pellet-shaped activated charcoal as an adsorbent to slowly adsorb any ethanol that has not been completely adsorbed by the first removal part 114.

Thus, the air taken in from the intake parts 111c of the enclosure 111 has a large amount of ethanol quickly adsorbed by the first removal part 114, and further, the ethanol is thoroughly adsorbed by the second removal part 116, so that the ethanol in the air taken in from the intake parts 111c can be sufficiently removed.

### [Variation 17]

While the example is described in which the pellet-shaped activated charcoal is used as the adsorbent used in the first removal part 114 of the first to third embodiments, it is not limited to this, and other adsorbents such as a sheet-shaped activated charcoal and a pellet-shaped activator may also be used.

Moreover, in the above-described variation 16, the example is described in which the sheet-shaped activated charcoal is used as the adsorbent used in the first removal part 114 and the pellet-shaped activated charcoal is used as the adsorbent used in the second removal part 116; however, it is not limited to this, and other adsorbents may be used in each removal part.

Furthermore, in the above-described variation 16, the example is described in which the adsorbents used in the first removal part 114 and the second removal part 116, respectively, are different from each other; however, they may be the same. Moreover, in order to remove ethanol, the ethanol may not only be adsorbed using an adsorbent but also be decomposed using a catalyst.

Furthermore, the ethanol may be removed both by being adsorbed and decomposed. For example, each of the first removal part 114 and the second removal part 116 may comprise an adsorbent and a catalyst, and the adsorption of ethanol by the adsorbent and the decomposition of ethanol by the catalyst may be performed within one removal part. Alternatively, the first removal part 114 may decompose ethanol using a catalyst, and the second removal part 116 may adsorb ethanol using an adsorbent, or the first removal part 114 may adsorb ethanol using an adsorbent, and the second removal part 116 may decompose ethanol using a catalyst. It should be noted that the adsorbents or catalysts used in the first removal part 114 and the second removal part 116 may be the same as or different from those used in the first removal part 114 and the second removal part 116.

Moreover, subjects to be adsorbed or decomposed in the first removal part 114 and the second removal part 116 may be different. For example, the first removal part 114 may be configured to adsorb or decompose volatile substances other than ethanol, and the second removal part 116 may be configured to adsorb or decompose ethanol, or the first removal part 114 may be configured to adsorb or decompose ethanol, and the second removal part 116 may be configured to adsorb or decompose volatile substances other than ethanol.

### [Variation 18]

In the ethanol removal devices 110, 210, and 110A of the above-described first to third embodiments, the drive control is performed by turning the power on and off; however, it is not limited to this. For example, a concentration sensor for detecting a concentration of ethanol may be installed inside the housing chamber 101, and the drive controls of the ethanol removal devices 110 and 210 may be performed based on a detection signal from the concentration sensor. For example, when the concentration of ethanol indicated by the detection signal of the concentration sensor becomes equal to or higher than a predetermined concentration, driving of the fan of the ethanol removal devices 110, 210, and 110A may be initiated, and when the concentration falls below the predetermined concentration, the driving of the fan of the ethanol removal devices 110, 210, and 110A may be stopped. Furthermore, if the detection signal of the concentration sensor indicates that the concentration of ethanol has increased further above the predetermined concentration while the ethanol removal devices 110, 210, and 110A are driving, the suction power may be increased, such that the rotation speed of the fan in the suction part 115 is increased, to suck in ethanol inside the housing chamber 101 more actively. This allows ethanol to be quickly sucked in and removed.

### [Variation 19]

While in the ethanol removal devices 110, 210, and 110A of the above-described first to third embodiments, the example is described in which the gas sensor 117 is provided between the first removal part 114 and the suction part 115 to detect a concentration of ethanol contained in air discharged from the first removal part 114, as shown in FIGS. 15 and 16, even if the second removal part 116 is provided in addition to the first removal part 114, the gas sensor 117 may be provided on the exhaust side of each removal part.

In this case, control parts (not shown) of the ethanol removal devices 110, 210, and 110A determine adsorption states of the first removal part 114 and the second removal part 116 (whether they are in breakthrough states (they adsorb beyond their adsorption functions, causing adsorption subjects to leak) or whether they are in states where they can sufficiently adsorb) based on the concentration of ethanol as detected by the gas sensor 117. Moreover, the control parts are not limited to function to determine the adsorption states of the first removal part 114 and the second removal part 116 using the gas sensor 117, and they may determine the adsorption states of the first removal part 114 and the second removal part 116 by other methods (methods using sensors other than the gas sensor 117).

While a detection means comprising the gas sensor 117 may be provided inside the ethanol removal devices 110, 210, and 110A, or may be provided outside the ethanol removal devices 110, 210, and 110A, it is preferably provided, for example, on the downstream side of the first removal part 114 (between the first removal part 114 and the second removal part 116). As such, the first removal part 114 can be replaced before it turns into a state where it is no longer able to exhibit a sufficient amount of adsorption at the first removal part 114 as the adsorption function of the first removal part 114 deteriorates or the second removal part 116 turns into a breakthrough state as the amount of adsorption at the second removal part 116 increases. Moreover, the detection means may be provided on the downstream side of the second removal part 116 to detect an adsorption state of the second removal part 116. Alternatively, the detection means may be provided both between the first removal part 114 and the second removal part 116 and on the downstream side of the second removal part 116 to detect adsorption states of both the first removal part 114 and the second removal part 116.

Moreover, by combining a detection result by a concentration sensor for detecting a concentration of ethanol provided inside the housing chamber 101 and a detection result by a detection means for detecting an adsorption state, the drive controls of the ethanol removal devices 110, 210, and 110A may be performed.

Furthermore, the gas sensor 117 may be provided on the upstream side of the first removal part 114. In this case, the gas sensor 117 detects a concentration of ethanol contained in air before the ethanol is adsorbed by the first removal part 114. That is, the gas sensor 117 detects a concentration of ethanol contained in the air inside the incubator 1. The drive control of the fan of the suction part 115 may be performed based on the concentration of ethanol detected by the gas sensor 117. For example, the rotation speed of the fan of the suction part 115 is controlled depending on the concentration of ethanol detected by the gas sensor 117. That is, if the concentration of ethanol is high, the rotation speed of the fan is increased, and if the concentration of ethanol is low, the rotation speed of the fan is decreased.

Moreover, each of the ethanol removal devices 110, 210, and 110A comprises a communication part, by which information on a concentration of ethanol detected by the gas sensor 117 is communicated to an external device, and may be used for a monitoring device for monitoring the concentration of ethanol in the incubator.

### [Variation 20]

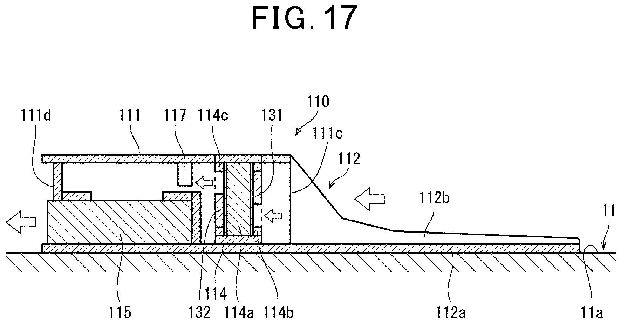

In this variation, as shown in FIG. 11, a first shielding member 121 extended from the top to the bottom of the first opening 114b blocks a part of the first opening 114b. Moreover, a second shielding member 122 extended from the bottom to the top of the second opening 114c blocks a part of the second opening 114c. The first shielding member 121 blocks approximately two-thirds of the upper side of the first opening 114b, and the second shielding member 122 blocks approximately two-thirds of the lower side of the second opening 114c. In this case, as shown in FIG. 17, the air entering through the intake parts 111c enters from the lower side of the first opening 114b of the first removal part 114, exits from the upper side of the second opening 114c, and is directly sucked in by the suction part 115. That is, the air taken into the first removal part 114 flows from the bottom to the top of the pellet-shaped activated charcoal 114a, and therefore, after the air is spread over almost the entire region of the pellet-shaped activated charcoal 114a, it is exhausted from the first removal part 114. It should be noted that the manners of providing the first shielding member 121 and the second shielding member 122 are not limited to the example shown in FIG. 11. For example, the first shielding member 121 may be formed from the bottom to the top of the first opening 114b, and the second shielding member 122 may be formed from the top to the bottom of the second opening 114c, or only one of the first shielding member 121 and the second shielding member 122 may be provided. In this case, the air taken into the first removal part 114 flows from the top to the bottom of the pellet-shaped activated charcoal 114a and spreads over almost the entire region of the pellet-shaped activated charcoal 114a. It should be noted that the lengths of the first shielding member 121 and the second shielding member 122, in other words, extent to which the first opening 114b and the second opening 114c are blocked, are not limited to the above-mentioned contents, and may be set appropriately taking into consideration an adsorption performance of an adsorption part, a flow rate of air, or the like.

### [Variation 21]

In the above-described first to third embodiments, the example is described in which each of the ethanol removal devices 110, 210, and 110A is turned on and off by operating a power button on the operation part of each device; however, it is not limited to this. For example, it is considered that each of the ethanol removal devices 110, 210, and 110A is provided with a tilt sensor, and, based on a detection signal from the tilt sensor, the drive control of the fan of the suction part 115 is performed. In this case, each of the ethanol removal devices 110, 210 and 110A determines that it is in usage state if the detection signal from the tilt sensor indicates that a tilt angle with respect to the ground is 0°±5°, with a main power supply turned on, and drives the fan of the suction part 115 to carry out the adsorption operation of ethanol. On the other hand, each of the ethanol removal devices 110, 210 and 110A determines that it is in stopped state if the detection signal from the tilt sensor indicates that the tilt angle with respect to the ground is 60°±20°, with the main power supply turned on, and stops the fan of the suction part 115 to stop the adsorption operation of ethanol. That is, each of the ethanol removal devices 110, 210 and 110A is configured to control the driving of the fan of the suction part 115 upon determination whether it is in usage or stopped state, even if the main power supply is turned on, so that the device can be prevented from being forgotten to be activated and stopped. It should be noted that an angle for determining usage state and an angle for determining stopped state, by the tilt sensor, are not limited to the above-mentioned values and may be set as appropriate.

### [Variation 22]

In the first to third embodiments, the ethanol removal devices 110, 210 and 110A may be provided with a sensor for detecting a wind speed (hereinafter referred to as a wind speed sensor) on the intake side. In this case, each of the control parts for the ethanol removal devices 110, 210 and 110A controls the driving of a motor that rotates the fan of the suction part 115 in accordance with a wind speed detected by the wind speed sensor. For example, if the wind speed sensor detects a wind speed within a predetermined range, the control part controls the motor to keep the rotation speed of the fan of the suction part 115 constant. For example, if the wind speed sensor detects a wind speed that exceeds the predetermined range and is faster than the constant wind speed, the control part controls the motor to reduce the rotation speed of the fan of the suction part 115, and if the wind speed sensor detects a wind speed that is slower than the constant wind speed, the control part controls the motor to increase the rotation speed of the fan of the suction part 115. In particular, each of the ethanol removal devices 110, 210 and 110A can thereby prevent the motor that rotates the fan of the suction part 115 from being excessively operated which affects the environment inside the incubator 1 (2). As such, by providing each of the ethanol removal devices 110, 210 and 110A with a wind speed sensor, it becomes possible to always monitor a wind speed on the intake side. As a result, the ethanol removal devices 110, 210 and 110A can make themself suck in an appropriate amount of air.

### [Variation 23]

While in the above-described fourth embodiment, the example is described in which the housing chamber 101 is provided with two openings 101a for treatment, the number of openings 101a may be three or more, as long as there are at least two.

### [Variation 23]

While in the above-described fourth embodiment, the example is described in which the drive control of the purification device 120 is performed by operation of an operation part provided on each device, the drive control may also be performed by operation of the operation panel 102a provided on the incubator 1.

### [Variation 24]

While in the above-described fourth embodiment, as shown in FIG. 1, the example is shown in which two purification devices 120 are arranged on one side of the bed 11 (a head side of the infant patient X), it is not limited to this, and two purification devices 120 may be arranged on the opposite side (a foot side of the infant patient X) or one purification device 120 may be arranged on each side of the bed 11, as long as they do not interfere with medical procedures and ethanol can be appropriately removed. The number of purification devices 120 to be installed may be one, or three or more.

### [Variation 25]

While in the above-described fourth embodiment, the example is described in which the protrusion part 121d is formed integrally with the first enclosure 121, it is not limited to this, and the protrusion part 121d may be provided separately from the first enclosure 121.

### [Variation 26]

While in the above-described fourth embodiment, the example is described in which the protrusion part 121d provided on the first enclosure 121 is provided continuously in the width direction of the first enclosure 121 (the direction perpendicular to the exhaust direction inside the first enclosure 121), it is not limited to this, and it may be provided intermittently. Moreover, one protrusion part 121d may be provided on each end of the bottom surface 121c of the first enclosure 121 in the width direction (the direction perpendicular to the exhaust direction inside the first enclosure 121). The shape of the protrusion part 121d is not particularly limited as long as it is a shape that allows the screen part 12 to be sandwiched with the side surface 122c of the second enclosure 122. It should be noted that the protrusion part 121d may be movable so that a distance from the protrusion part 121d to the side surface 122c of the second enclosure 122 is adjusted depending on a thickness of the screen part 12.

### [Variation 27]

While in the above-described fourth embodiment, the example is described in which the sheet-shaped activated charcoal is used as the adsorbent in the first removal part 124, it is not limited to this, and other adsorbents may be used as long as they are capable of adsorbing ethanol.

### [Variation 28]

In the above-described fourth embodiment, the example is described in which the sirocco fan for blowing out air in the direction perpendicular to the rotation axis direction is used, as the blowing direction of the outside air flowing in the second removal part 126 from the suction part 125 is perpendicular to the blowing direction of the outside air flowing in the suction part 125 from the first removal part 124, but it is not limited to this. A type of the fan may be changed depending on structures of the first enclosure 121 and the second enclosure 122. For example, if a suction direction and an exhaust direction in the first enclosure 121 are the same, an axial flow fan may be used. Moreover, the number of fans used in the suction part 125 is not limited to two, and may be one, or three or more. Thus, the type and number of fans are selected taking into consideration a power supply method, power consumption, a required flow rate, etc., to be adopted for the purification device.

### [Variation 29]

While in the above-described fourth embodiment, the example is described in which the pellet-shaped activated charcoal is used as the adsorbent in the second removal part 126, it is not limited to this, and other adsorbents may be used as long as they are capable of adsorbing ethanol.

### [Variation 30]

In the above-described fourth embodiment, the example is described in which the adsorbents used in the first removal part 124 and the second removal part 126, respectively, are different from each other; however, they may be the same. Moreover, in order to remove ethanol, the ethanol may not only be adsorbed using an adsorbent but also be decomposed using a catalyst.

Furthermore, ethanol may be removed both by being adsorbed and decomposed. For example, each of the first removal part 124 and the second removal part 126 may be provided with an adsorbent and a catalyst, and the adsorption of ethanol by the adsorbent and the decomposition of ethanol by the catalyst may be performed within one removal part. Alternatively, the first removal part 124 may decompose ethanol using a catalyst, and the second removal part 126 may adsorb ethanol using an adsorbent, or the first removal part 124 may adsorb ethanol using an adsorbent, and the second removal part 126 may decompose ethanol using a catalyst.

Moreover, subjects to be adsorbed or decomposed in the first removal part 124 and the second removal part 126 may be different. For example, the first removal part 124 may be configured to adsorb or decompose volatile substances other than ethanol, and the second removal part 126 may be configured to adsorb or decompose ethanol, or the first removal part 124 may be configured to adsorb or decompose ethanol, and the second removal part 126 may be configured to adsorb or decompose volatile substances other than ethanol. Moreover, the first removal part 124 and the second removal part 126 may be replaceable.

### [Variation 31]

While in the above-described fourth embodiment, the example is described in which one first removal part 124 is provided in the first enclosure 121 and one second removal part 116 is provided in the second enclosure 122, any one of the first removal part 124 and the second removal part 126 may be provided, and two or more removal parts may be provided in each of the first enclosure 121 and the second enclosure 122. Methods of removing volatile substances in these removal parts may be the same or different.

### [Variation 32]

In the above-described fifth embodiment, the example is described in which the exhaust port 223a of the tube 223 in the purification device 220 is installed at the position under the bed 11; however, it is not limited to this. The installing position of the exhaust port 223a of the tube 223 in the purification device 220 may be anywhere as long as it is a position for exhausting air to a location that does not affect the infant patient X on the bed 11 and a location that has little effect on circulation inside the incubator 1. In particular, the installing position of the exhaust port 223a of the tube 223 in the purification device 220 may be a position where the air exhausted from the exhaust port 223a is not blown directly onto the infant patient on the bed 11. For example, the exhaust port 223a of the tube 223 may be installed on the bed 11 so long as the air is exhausted toward surrounding walls that constitute the housing chamber 101.

### [Variation 33]

While in the above-described fifth embodiment, the example is described in which the purification device 220 is arranged under the bed 11, the position of the purification device 220 is not limited to this. For example, if there is a sufficient space in the gap between the screen part 12 of the bed 11 and the inner wall surface of the housing chamber 101, the purification device 220 may be installed on the screen part 12 of the bed 11. In this case, the second enclosure 222 is installed with a side surface 222d thereof being close to the screen part 12, with the first enclosure 221 being on the upper side. At this time, a protrusion part that is the same as the protrusion part 121d described in the first embodiment is provided on the upper surface 221c of the first enclosure 221, and the purification device 220 is fixed to the screen part 12 by this protrusion part. In this case, the tube 223 is installed so that the exhaust port 223a of the tube 223 in the purification device 220 faces the space under the bed 11.

Moreover, the purification device 220 may be installed on the surface 11a of the bed 11. In this case, the first enclosure 221 is installed at a position that does not interfere with treatment on an infant patient on the surface 11a of the bed 11, and the tube 223 is installed so that the exhaust port 223a of the tube 223 faces the space below the bed 11.

### [Variation 34]

In configurations of the purification device 220, it is difficult to reduce the size of the first enclosure 221 comprising the suction part 125, whereas it is easy to reduce the size, particularly the thickness, of the second enclosure 222 that is a purification part comprising the second removal part 126. Thus, the first enclosure 221 comprising the suction part 125 and the second enclosure 222 that is the purification part may be configured to be separated, and the first enclosure 221 may be installed under the bed 11 and the second enclosure 222 may be installed on the screen part 12 of the bed 11.

Specifically, it is considered that a flexible tube such as the tube 223 provided in the purification device 220 in FIG. 10 is provided between the first enclosure 221 and the second enclosure 222, and outside air sucked in by the first enclosure 221 is sent to the second enclosure 222 through the flexible tube. In this case, the length of the flexible tube may be set depending on a distance between the installing location of the first enclosure 221 comprising the suction part 125 (under the bed 11) and the installing location of the second enclosure 222 that is the purification part (on the screen part 12).

In the purification device of this variation, by separating the first enclosure 221 comprising the suction part 125 having the fan and the second enclosure 222 comprising the second removal part 126 which is the purification part, the first enclosure 221 that is difficult to be reduced in size is arranged under the bed 11, and only the second enclosure 222 that is easy to be reduced in size is installed on the screen part 12. Thereby, even if it is difficult to install the first enclosure 221 on the screen part 12 in terms of space, the air inside the housing chamber 101 can be purified by installing only the second enclosure 222, which constitutes the purification part, on the screen part 12.

### [Variation 35]

Moreover, the corners of parts bent in the first enclosure 121 of the fourth embodiment and the second enclosure 222 of the fifth embodiment may be chamfered. A range can be thereby widened in which the first enclosure 121 and the second enclosure 222 are swung between the screen part 12 and the peripheral wall of the housing chamber 101 when the purification devices 120, 220 are installed in the housing chamber 101.

### [Variation 36]

In the purification devices 120, 220, and 230 in the above-described fourth to sixth embodiments, the drive control is performed by turning the power on and off; however, it is not limited to this. For example, a concentration sensor for detecting a concentration of ethanol may also be installed inside the housing chamber 101, and the drive controls of the purification devices 120, 220, and 230 may be performed based on a detection signal from the concentration sensor. For example, when the concentration of ethanol indicated by the detection signal of the concentration sensor becomes equal to or higher than a predetermined concentration, the driving of the fan of the suction part 125 may be initiated, and when the concentration falls below the predetermined concentration, the driving of the fan of the suction part 125 may be stopped. Furthermore, if the detection signal of the concentration sensor indicates that the concentration of ethanol has increased further above the predetermined concentration while the purification devices 120, 220, and 230 are in operation, the suction power may be increased, such that the rotation speed of the fan in the suction part 125 is increased, to suck in ethanol inside the housing chamber 101 more actively. This allows ethanol to be quickly sucked in and removed.

Furthermore, the purification devices 120, 220, and 230 may be provided with a detection means for detecting an adsorption state of the first removal part 124 or the second removal part 126. The detection means may be a concentration sensor that detects a concentration of ethanol. In this case, the purification devices 120, 220, and 230 determine the adsorption states of the first removal part 124 and the second removal part 126 (whether they are in a breakthrough state (a state in which adsorption or the like exceeds the adsorption function, causing the adsorption subject to leak) or whether they are in a sufficient adsorption state) based on the concentration of ethanol detected by the detection means.

Although the detection means may be provided inside the purification devices 120, 220, and 230, or may be provided outside the purification devices 120, 220, and 230, it is preferably provided, for example, on the downstream side of the first removal part 124 (between the first removal part 124 and the second removal part 126). As such, the adsorption state of the first removal part 124 can be detected, allowing the first removal part 124 to be replaced before, for example, the first removal part 124 turns into a state where it is no longer able to exhibit a sufficient adsorption function as the adsorption function of the first removal part 124 deteriorates or the second removal part 126 turns into a breakthrough state as the amount of adsorption at the second removal part 126 increases. Moreover, the detection means may be provided on the downstream side of the second removal part 126 to detect an adsorption state of the second removal part 126. Alternatively, the detection means may be provided both between the first removal part 124 and the second removal part 126 and on the downstream side of the second removal part 126 to detect adsorption states of both the first removal part 124 and the second removal part 126.

Moreover, by combining a detection result by the concentration sensor that detects a concentration of ethanol provided inside the housing chamber 101 and a detection result by the detection means that detects the adsorption state, the drive controls of the purification devices 120, 220, and 230 may be performed.

Furthermore, the detection means may be provided on the upstream side of the first removal part 124. In this case, the detection means detects a concentration of ethanol contained in the air before ethanol is adsorbed by the first removal part 124. That is, the detection means detects a concentration of ethanol contained in the air inside the incubator 1. The drive control of the fan of the suction part 125 may be performed based on the concentration of ethanol detected by the detection means.

In this case, control parts (not shown) of the purification devices 120, 220, and 230 control the driving of a motor that rotates the fan of the suction part 125 in accordance with the concentration of ethanol detected by the detection means. For example, if the concentration of ethanol detected by the detection means is higher than a predetermined value, the control part controls the driving of the motor so as to increase the rotation speed of the fan, and on the other hand, if the concentration of ethanol detected by the detection means is equal to or lower than the predetermined value, the control part controls the driving of the motor so as to decrease the rotation speed of the fan.

Moreover, the purification devices 120, 220, and 230 comprise a communication part, and the communication part may communicate information indicating the concentration of ethanol detected by the detection means to an external device, thereby monitoring the concentration of ethanol inside the incubator 1. That is, the purification devices 120, 220, and 230 function as monitoring devices that monitor the concentration of ethanol inside the incubator 1.

### [Variation 37]

In order to suppress the influence of the purification device 120 on the infant patient, the intake part 121b of the purification device 120 is present at a position higher than the infant patient. This makes it possible to increase a rate of removal of ethanol and to suppress adverse effects on the infant patient caused by the air flow speed around the infant patient increasing due to intake through the intake part 121b. For example, the intake part 121b of the purification device 120 may be set between the top of the screen part 12 of the bed 11 and a bottom fan provided within the bed stage 13, and at a height other than the same height as the infant patient. Moreover, the intake part 121b may be installed at a part where the air flow from around the bed 11 reaches a ventilation fan (not shown) inside the incubator 1 (2).

### [Variation 38]

In the above-described fourth to sixth embodiments, the purification devices 120, 220, and 230 may be provided with a sensor for detecting a wind speed (hereinafter referred to as a wind speed sensor) on the intake side. In this case, the control parts in the purification devices 120, 220, and 230 control the driving of a motor that rotates fans of suction parts 125, 225 in accordance with a wind speed detected by the wind speed sensor. For example, if the wind speed sensor detects a wind speed within a predetermined range, the control part controls the motor to keep the rotation speeds of the fans of the suction parts 125, 225 constant, if the wind speed sensor detects a wind speed that exceeds the predetermined range and is faster than the constant wind speed, the control part controls the motor to reduce the rotation speeds of the fans of the suction parts 125, 225, and if the wind speed sensor detects a wind speed that is slower than the constant wind speed, the control part controls the motor to increase the rotation speeds of the fans of the suction part 125, 225. This makes it possible for the purification devices 120, 220, and 230 to prevent the environment inside the incubator 1 (2) from being affected in particular by an excessive actuation of the motor that rotates the fans of the suction parts 125, 225. As such, the fans of the suction parts 125, 225, by comprising a wind speed sensor, become possible to always monitor a wind speed on the intake side. As a result, the fans of the suction parts 125, 225 can make themself suck in an appropriate amount of air.

### [Variation 39]

The intake parts 121b, 221b of the purification devices 120, 220, and 230 are preferably provided at positions that do not inhibit air circulation in the incubator 1 (2). The intake parts 121b, 221b are particularly preferably provided at positions that do not fluctuate air circulation around the infant patient X inside the incubator 1 (2). Furthermore, the intake parts 121b, 221b are preferably provided between a site where air flows down from the top of the bed 11 in which medical procedures are performed on the infant patient X inside the incubator 1 (2), and a ventilation fan (not shown) of the main body of the incubator 1 (2), so that ethanol is not diffused throughout the whole area of the incubator 1 (2) by an incubator fan (not shown).

### [Variation 40]

The purification devices 120, 220, and 230 may be provided with a flow rate sensor that detects a flow rate of air exhausted from the exhaust part 122b and the exhaust port 223a. The control parts of the purification devices 120, 220, and 230 determine that the operation of the fan of the suction part 125 is normal if a flow rate detected by the flow sensor is within a predetermined range, and determine that it is abnormal in removal function if a flow rate detected by the flow sensor exceeds the predetermined range. The abnormality in removal function in this case indicates a case where the fan of the suction part 125 is not operating normally or a case where air cannot be exhausted from the exhaust part 122b and the exhaust port 223a. The case where air cannot be exhausted is considered to be a case where the exhaust part 122b and the exhaust port 223a are clogged due to filter blockage or foreign substances. Then, when it is determined that the removal function is in abnormal, the purification devices 120, 220, and 230 notify a practitioner of the abnormality in removal function. This prevents the purification devices 120, 220, and 230 from being continued to be used in a state where ethanol cannot be removed. Accordingly, the purification devices 120, 220, and 230 provided with flow rate sensors can be said to be preferable devices in terms of safety management. It should be noted that in the purification devices 120, 220, and 230, the flow rate sensors may be provided between the respective first removal part 124 and second removal part 126.

### [Variation 41]

In the above-described seventh embodiment, the example is described in which the supplying part 420 supplies the medical gas; however, it is not limited to this. In addition to supplying the medical gas, the supplying part 420 may also supply, for example, air outside the incubator 1 (for example, air inside NICU (Neonatal Intensive Care Unit) where the incubator 1 is installed). In this case, the air inside the NICU can be made clean by passing it through an activated charcoal, a filter, or the like when it is supplied into the incubator 1, and then supplied into the incubator 1.

### [Variation 42]

Furthermore, the supplying part 420 may be configured to switch between the medical gas and the air inside the NICU for supplying it into the incubator 1. In this case, in addition to making the air inside the NICU clean through the above-mentioned filter or the like, a sensor for detecting a concentration of ethanol outside the incubator 1 (inside the NICU) may be provided to determine which of the medical gas or the air inside the NICU to be supplied first depending on a detection result by the sensor. Furthermore, a sensor for detecting the concentration of ethanol inside the incubator 1 may be provided to switch which of the medical gas or the air inside the NICU is supplied first, depending on the detection result of the sensor and the detection result of the sensor for detecting the concentration of ethanol outside the incubator 1 (inside the NICU). For example, from the detection results of the two sensors, if it is determined that the concentration of ethanol inside the NICU is lower than the concentration of ethanol inside the incubator 1, the supplying part 420 supplies the air inside the NICU into the incubator 1, and if it is determined that the concentration of ethanol inside the NICU is higher than the concentration of ethanol inside the incubator 1, the supplying part 420 supplies the medical gas into the incubator 1.

### [Variation 43]

In the above-described seventh embodiment, the example is described in which the air conditioner 401 comprises all of the circulating part 410, the supplying part 420, and the discharging part 430. However, the air conditioner 401 does not need to comprise all of the circulating part 410, the supplying part 420, and the discharging part 430. For example, the air conditioner 401 may comprise the circulating part 410 and the supplying part 420, and the discharging part 430 may be provided in another device separate from the air conditioner 401.

### [Variation 44]

In the above-described seventh embodiment, the example is described in which the removal device 402 is provided separately from the air conditioner 401; however, it is not limited to this. The removal device 402 does not have to be provided separately from the air conditioner 401. An adsorbent (such as a pellet-shaped activated charcoal) that adsorbs ethanol may be provided inside the air conditioner 401 to realize the same function as the removal device 402. For example, the adsorbent that adsorbs ethanol may be provided in at least one of the circulating part 410, the supplying part 420, and the discharging part 430 in the air conditioner 401 to realize the same function as the removal device 402.

### [Variation 45]

While in the above-described first embodiment, a configuration is described in which the removal device 402 is provided outside the housing chamber 101, it is not limited to this, and the removal device 402 may be provided inside the housing chamber 101. In this case, there is no need to secure a space for installing the removal device 402.

Moreover, in the incubation system 501, the ethanol removal device 110 and the purification device 120 may be provided in the housing chamber 101, besides the removal device 402, as in the incubator 1 of the first embodiment. In this case, ethanol that could not be sufficiently adsorbed by the removal device 402 can be adsorbed by the ethanol removal device 110 and the purification device 120 in the housing chamber 101, so that the concentration of ethanol contained in the air inside the housing chamber 101 can be further lowered.

Moreover, it is preferable to install both the ethanol removal device 110 and the purification device 120 in the housing chamber 101; however, only one of them may be installed. If either the ethanol removal device 110 or the purification device 120 is installed, it is preferable to install the ethanol removal device 110. This is because, as shown in FIG. 1 of the first embodiment, by installing the ethanol removal device 110 in proximity to the infant patient X to be treated in the housing chamber 101, ethanol generated during treatment such as disinfection can be effectively adsorbed.

### [Variation 46]

While in the above-described second embodiment, the circulating part 410, the supplying part 420, and the discharging part 430 are described as a single device, as mentioned above, the incubation system may take various forms. For example, the circulating part 410, the supplying part 420, and the discharging part 430 may realize, by a plurality of devices, a function as the circulating part 410, a function as the supplying part 420, and a function as the discharging part 430, respectively, or may realize a function as the air conditioner 401 so that the supplying part 420 and the discharging part 430 are incorporated into the circulating part 410.

It should be noted that in each of the above-described embodiments and variations, ethanol is described as an example of a volatile substance to be removed; however, it is not limited to ethanol, and may be another volatile substance such as, for example, isopropanol.

In addition, in each of the above-described embodiments and each of the variations, the closed-type incubator is described as an example of an incubator. However, the volatile substance removal device and the purification device of the present invention may also be used in an open-type incubator that is not of a closed type.

In the open-type incubator, a housing chamber for housing an infant patient is composed of wall parts erected surrounding a bed on which the infant patient lies. A purification device may be mounted to this wall to remove volatile substances such as ethanol floating in the housing chamber. Moreover, the purification device may be suspended from a top of an operating panel (higher than the wall surrounding the bed) on which an operation part is provided in the open-type incubator to remove volatile substances such as ethanol floating in the housing chamber.

The ethanol removal device 110, 210, and 110A according to one aspect of the present disclosure is an ethanol removal device that is installed inside the incubators 1, 2 each provided with a housing chamber 101 in which the internal temperature and humidity can be regulated to house an infant patient and that remove ethanol vaporized due to medical procedures using ethanol on the infant patient X housed inside the housing chamber 101, where the ethanol removal device may comprise an suction part 115 for sucking in air inside the housing chamber 101 from intake parts 111c, a first removal part 114 for removing ethanol contained in the air, an exhaust part 111d for exhausting the air from which ethanol has been removed by the first removal part 114, and a guiding part 112, 212 for guiding the air to the intake parts 111c.

According to the above-described configuration, the ethanol removal device comprises the guiding part 112, 212 for guiding the air inside the closed-type incubator 1, 2 to the intake parts, so that the air can be efficiently guided to the suction part 115. This allows the fan constituting the suction part 115 to be small, so that the size of the entire device can be reduced. Thus, even if the ethanol removal device 110, 210, and 110A is used in the closed-type incubator 1, 2, the size thereof can be reduced so as not to interfere with the medical procedures on the infant patient X.

The guiding part 112, 212 may have a loading part 112a, 212a on which at least one of at least a part of a treatment subject for treatment with ethanol and a source generating ethanol used for the treatment can be loaded. As the guiding part 112, 212 has the loading part 112a, 212a on which at least a part of the treatment subject (e.g., the hand, foot, etc. of the infant patient) for the treatment with ethanol or the source generating ethanol used for the treatment can be loaded, it becomes possible to guide air containing ethanol that is generated when treating the treatment subject X on the loading part 112a, 212a to the intake parts 111c by the guiding part 112, 212. Moreover, it becomes possible to actively guide air containing ethanol floating around the source generating ethanol loaded on the loading part 112a, 212a and used for the treatment to the intake parts 111c by the guiding part 112, 212. This makes it possible to remove ethanol contained in the air inside the closed-type incubator 1, 2 in a short period of time.

The guiding part 112, 212 may have at least one first wall part (wall part) 112b, 212b erected upward from the peripheral edge of the loading part 112a, 212a. The guiding part 112, 212 has at least one first wall part (wall part) 112b, 212b erected upward from the peripheral edge of the loading part 112a, 212a, so that the wall can prevent ethanol generated when treating a treatment target placed on the loading part 112a, 212a from diffusing outside the loading part 112a, 212a. This makes it possible to guide air containing ethanol more actively into the intake parts 111c.

The guiding part 112, 212 may have at least one second wall part (wall part) 112b, 212c provided on the loading surface of the loading part 112a, 212a in parallel with the first wall part (wall part) 112b, 212b. According to the above-described configuration, the second wall part (wall part) 112b, 212c is provided on the loading surface, air can be guided between the first wall part (wall part) 112b, 212b and the second wall part (wall part) 112b, 212c on the loading surface, thereby making it easier to guide the air to the intake parts 111c.

The first wall part (wall part) 112b, 212b may be formed excluding the part opposite the intake parts 111c. The first wall part (wall part) 112b, 212b is formed excluding the part opposite the intake parts 111c, so that treatment with ethanol can be performed on a treatment subject X placed on the loading part 112a, 212a from a place where the wall is not formed. Moreover, the first wall part (wall part) 112b, 212b can be configured not to inhibit guidance of ethanol to the intake parts 111c. Thereby, the treatment with ethanol on the treatment subject X can be performed without being hindered by the wall, making the treatment on the treatment subject easy to be performed, and the ethanol in air can be removed.

Among the first wall part (wall part) 112b, 212b and the second wall part (wall part) 112b, 212c, at least the second wall part (wall part) 112b, 212c may be formed of a material having elasticity. According to the above-described configuration, the second wall part (wall part) 112b, 212c provided on the loading surface has elasticity, so that the hand or foot of the infant patient X to be treated is unlikely to be injured even when placed on the loading part 112a, 212a.

At least a part of the guiding part 112, 212 may also be connected to the intake parts 111c. As such, at least the part of the guiding part 112, 212 is connected to the intake parts 111c, so that air can be securely guided to the intake parts 111c.

A breakthrough sensor (gas sensor) 117 may be provided, which detects whether the first removal part 114 is in a breakthrough state or not. According to the above-described configuration, the breakthrough sensor (gas sensor) 117 is provided, allowing the breakthrough state of the first removal part 114 to be monitored, and thus, the state of the first removal part 114 can be understood.

The first removal part 114 may be replaceable. According to the above-described configuration, the first removal part 114 is replaceable, so that the first removal part 114 can be immediately replaced if it is in a breakthrough state.

The ethanol removal method according to one aspect of the present disclosure is a removal method of removing ethanol vaporized during medical procedures with ethanol on an infant patient X housed in a housing chamber 101, which is installed in an incubator equipped with the housing chamber 101 in which internal temperature and humidity can be regulated to house the infant patient X. The ethanol removal method includes a guide step (S1), a suction step (S2), a removal step (S3), and an exhaust step (S4), as described below. Guide step (S1): Air inside the housing chamber 101 is sucked in a removal means (e.g., a first removal part 114) and guided to an intake means (e.g., an intake part 111c). Suction step (S2): The air inside the incubator 1, 2 is sucked in by a suction means (e.g., a suction part 115) from the intake means (e.g., the suction part 111c). Removal step (S3): Ethanol contained in the sucked-in air is removed by a removal means (e.g., the first removal part 114). Exhaust step (S4): The air, from which ethanol has been removed, is exhausted by an exhaust means (e.g., an exhaust part 111d).

According to the above-described configuration, the method comprises the guide step for guiding the air inside the closed-type incubator 1, 2 to the intake parts 111c, so that the air can be efficiently guided by the suction means. This allows the fan constituting the suction means to be small, so that the size of the entire device for realizing the ethanol removal method can be reduced. Thus, even if the device for realizing the ethanol removal method is used inside the closed-type incubator 1, 2, it does not interfere with medical procedures on the infant patient.

The exhaust direction of the air by the exhaust means may be a direction different from a direction in which the intake means is provided. The intake means takes in air containing ethanol, and the exhaust means exhausts air from which ethanol has been removed. Therefore, if the air, from which ethanol has been removed, is introduced to the intake means, the air containing ethanol cannot be efficiently taken in. Thus, by setting the exhaust direction of the air by the exhaust means to the direction different from the direction in which the intake means is provided, the air exhausted from the exhaust means (the air from which ethanol has been removed) cannot interfere with the intake of air containing ethanol by the intake means.

### [Supplement]

The incubator according to the present disclosure can also be expressed as follows.

The incubator according to one aspect of the present disclosure comprises a housing chamber capable of housing an infant patient, a circulating part for circulating air, in which temperature and humidity are regulated, through the housing chamber, a supplying part that can supply the air from the outside to the inside of the housing chamber, an discharging part that can discharge at least a part of the air inside the housing chamber to the outside of the housing chamber, and a removal part for removing volatile substances from the air inside the housing chamber.

According to the above-described configuration, the incubator comprises the removal part for removing volatile substances from the air inside the housing chamber. Moreover, the incubator also comprises an air conditioning part for circulating air through the housing chamber, the supplying part that can supply the air from the outside to the inside of the housing chamber, and the discharging part that can discharge at least a part of the air inside the housing chamber to the outside of the housing chamber. The incubator can supply the air outside the housing chamber into the housing chamber and reduce the concentration of volatile substances from the air inside the housing chamber. Moreover, the incubator can remove volatile substances from the air inside the housing chamber by the removal part, while circulating the air inside the housing chamber. This makes it possible to avoid the infant patient inside the incubator from being unintentionally exposed to volatile substances.

The removal part may be provided inside the housing chamber. As such, if the removal part is provided inside the housing chamber, it is not required to secure a space for installing a removal part besides the space for installing the incubator.

The removal part may be configured to suck in air inside the housing chamber, guide the air to the removal part, and exhaust the air, which has passed through the removal part, into the housing chamber. The temperature and humidity of the air inside the incubator are adjusted. According to the above-described configuration, the removal part exhausts the air, from which predetermined volatile substances have been removed, into the housing chamber. This allows the incubator to remove the predetermined volatile substances while maintaining the temperature and humidity inside the housing chamber.

The incubation system according to one aspect of the present disclosure comprises an incubator equipped with a housing chamber capable of housing an infant patient, a circulating mechanism for circulating air, in which temperature and humidity are regulated, through the housing chamber, a supplying mechanism that can supply the air from the outside to the inside of the housing chamber, an discharging mechanism that can discharge at least a part of the air inside the housing chamber to the outside of the housing chamber, and a removal mechanism for removing volatile substances from the air inside the housing chamber.

According to the above-described configuration, the incubation system comprises the removal mechanism for removing volatile substances from the air inside the housing chamber of the incubator. Moreover, the incubation system also comprises the circulating mechanism for circulating air through the housing chamber, the supplying mechanism that can supply the air from the outside to the inside of the housing chamber, and the discharging mechanism that can discharge at least a part of the air inside the housing chamber to the outside of the housing chamber. The incubation system can supply the air outside the housing chamber of the incubator into the housing chamber and reduce the concentration of volatile substances from the air inside the housing chamber. Moreover, the incubation system can remove volatile substances from the air inside the housing chamber of the incubator by the removal mechanism, while circulating the air inside the housing chamber. This makes it possible to avoid the infant patient inside the incubator from being unintentionally exposed to volatile substances.

The removal mechanism may be installed inside the housing chamber. As such, if the removal mechanism is provided inside the housing chamber, it is not required to secure a space for installing the removal mechanism besides the space for installing the incubator.

The removal method according to one aspect of the present disclosure is a removal method of removing volatile substances inside a housing chamber, where air, in which temperature and humidity are regulated, is circulated, of an incubator, the method comprising: a supply step of supplying the air from the outside to the inside of the housing chamber; a discharge step of discharging the air inside the housing chamber to the outside of the housing chamber; and a removal step of sucking-in the air inside the housing chamber and removing the volatile substances.

According to the above-described configuration, the air outside the housing chamber of the incubator can be supplied into the housing chamber to reduce the concentration of volatile substances in the air inside the housing chamber. Moreover, the volatile substances in the air inside the housing chamber can be removed while circulating the air inside the housing chamber of the incubator. This makes it possible to avoid the infant patient inside the incubator from being unintentionally exposed to volatile substances.

In the removal step, the air inside the housing chamber may include a first air located away from a source generating the volatile substances and a second air located near the source generating the volatile substances. Since volatile substances with high concentration can be generated from a source for volatile substance, there is a risk that the volatile substances will fill inside the housing chamber if the source is present inside the housing chamber. According to the above-described configuration, in the removal step, the volatile substances are removed from the first air located away from the source, and the volatile substances are removed from the second air located near the source. This makes it possible to effectively remove the volatile substances from the air inside the housing chamber.
(1): An incubator according to one aspect of the present disclosure comprises a housing chamber capable of housing an infant patient and a removal part for removing volatile substances from air inside the housing chamber.
   According to the above-described configuration, the incubator can remove the volatile substances contained in the air inside the housing chamber by the removal part, so that the infant patient inside the incubator can be avoided from being unintentionally exposed to the volatile substances.
(2): The incubator described in (1), wherein the incubator may comprise a circulating part for circulating air, in which temperature and humidity are regulated, through the housing chamber.
   According to the above-described configuration, the temperature and humidity of the air inside the housing chamber can be maintained within predetermined ranges.
(3): The incubator described in (1) or (2), wherein the incubator may comprise a bed having a placing surface on which the infant patient is placed, wherein the removal part may be provided below the placing surface.
   According to the above-described configuration, the removal part is provided below the placing surface of the bed, so that the space for treating the infant patient on the spacing surface of the bed is increased, which makes the treatment easy.
(4): The incubator described in any one of (1) to (3), wherein the incubator may further comprise an installation stand on which the bed is installed, wherein the removal part may be provided inside the installation stand, making it possible to replace an adsorbent from outside the installation stand.
   According to the above-described configuration, the adsorbent can be replaced from outside the installation stand, so that the adsorbent can be easily replaced even when the removal part is provided inside the installation stand.
(5): The incubator described in any one of (1) to (4), wherein the installation stand may have a slidable holder for holding the removal part, wherein the holder can be taken in and out from an opening formed on the side surface of the installation stand.
   According to the above-described configuration, the slidable holder can be taken in and out from the opening formed on the side surface of the installation table, so that the adsorbent can be easily replaced through the opening.
(6): The incubator according to any one of (1) to (5), wherein the removal part may be of a cartridge type in which the adsorbent is housed in a container.
   According to the above-described configuration, the removal part is of a cartridge type, so that the operation of replacing the adsorbent becomes further facilitated.
(7): An incubation system according to one aspect of the present disclosure comprises an incubator with a housing chamber capable of housing an infant patient and a removal mechanism for removing volatile substances from air inside the housing chamber.
   According to the above-described configuration, the incubation system can remove the volatile substances contained in the air inside the housing chamber by the removal mechanism, so that the infant patient inside the incubator can be avoided from being unintentionally exposed to the volatile substances.
(8): A removal method according to one aspect of the present disclosure is a removal method of removing volatile substances inside a housing chamber capable of housing an infant patient by a removal means provided in an incubator with the housing chamber, wherein the removal means removes volatile substances from air inside the housing chamber.

According to the above-described configuration, the removal method can remove the volatile substances contained in the air inside the housing chamber by the removal means, so that the infant patient inside the incubator can be avoided from being unintentionally exposed to the volatile substances.

The present invention is not limited to each of the above-mentioned embodiments, and various modifications are possible within the scope of claims. Embodiments obtained by appropriately combining the technical means disclosed in different embodiments, respectively, are also included in the technical scope of the present invention.

### REFERENCE SIGNS LIST

1, 1A, 3, 3A. Incubator
11. Bed
11a. Surface (Placing surface)
12. Screen part
13. Bed stage (Installation stand)
14. Installation stand
14a. Opening
101. Housing chamber
101a. Opening
102. Loading stand (Installation stand)
102a. Operation panel
110. Volatile substance removal device
111. Enclosure
111a. Front surface
111b. Rear surface
111c. Intake part
111d. Exhaust part
112. Guiding part
112a. Loading part
112b. Wall part
114. First removal part
114a. Activated charcoal (Adsorbent)
115. Suction part
116. Second removal part
120. Purification device
121. First enclosure
121a. Front surface
121b. Intake part
121c. Bottom surface
121d. Protrusion part
122. Second enclosure
122a. Rear surface
122b. Exhaust part
122c. Side surface
124. First removal part
125. Suction part
126. Second removal part
134. First removal part (Removal part)
210. Volatile substance removal device
212. Guiding part
212a. Loading part
212b. First wall part
212c. Second wall part
215. Suction part
220. Purification device
221. First enclosure
221a. Front surface
221b. Intake part
222. Second enclosure
222a. Side surface
223. Tube
223a. Exhaust port
240. Purification device
312. Guiding part
312a. Wall part
401. Air conditioner
402. Removal device (Removal mechanism)
410. Circulating part (Circulating mechanism)
420. Supplying part (Supplying mechanism)
430. Discharging part (Discharging mechanism)
501. Incubation system
X. Infant patient (Treatment subject)

## Claims

1. An incubator comprising:
a housing chamber capable of housing an infant patient; and
a removal part for removing volatile substances from air inside the housing chamber.

2. The incubator of claim 1, comprising a circulating part for circulating air, in which temperature and humidity are regulated, through the housing chamber.

3. The incubator of claim 1, comprising a bed having a placing surface on which the infant patient is placed,
wherein the removal part is provided below the placing surface.

4. The incubator of claim 3, comprising an installation stand on which the bed is installed,
wherein the removal part is provided inside the installation stand, making it possible to replace the adsorbent from outside the installation stand.

5. The incubator of claim 4,
wherein the installation stand has a slidable holder for holding the removal part, and
wherein the holder can be taken in and out from an opening formed on the side surface of the installation stand.

6. The incubator of any one of claims 1 to 5,
wherein the removal part is of a cartridge type in which the adsorbent is housed in a container.

7. An incubation system comprising:
an incubator with a housing chamber capable of housing an infant patient; and
a removal mechanism for removing volatile substances from air inside the housing chamber.

8. A removal method of removing volatile substances from inside a housing chamber capable of housing an infant patient by a removal means provided in an incubator with the housing chamber,
wherein the removal means removes the volatile substances from air inside the housing chamber.
